(19) Europäisches Patentamt
European Patent Office
Office européen des brevets

(11) EP 3 252 423 B1

(12) FASCICULE DE BREVET EUROPEEN

(45) Date de publication et mention
de la délivrance du brevet:
**15.01.2020 Bulletin 2020/03**

(51) Int Cl.:
*F41G 7/22* (2006.01)       *G01S 13/524* (2006.01)
*G01S 7/40* (2006.01)       *G01S 13/72* (2006.01)
*G01S 13/02* (2006.01)

(21) Numéro de dépôt: **17172380.2**

(22) Date de dépôt: **23.05.2017**

(54) **PROCÉDÉ DE DÉTECTION ADAPTATIVE D'UNE CIBLE PAR UN DISPOSITIF RADAR EN PRÉSENCE D'INTERFÉRENCES STATIONNAIRES, ET RADAR ET AUTODIRECTEUR DE MISSILE METTANT EN OEUVRE UN TEL PROCÉDÉ**

ADAPTIVES DETEKTIONSVERFAHREN EINES ZIELS MITHILFE EINER RADARVORRICHTUNG IN PRÄSENZ VON STATIONÄREN INTERFERENZEN, UND RADAR UND ZIELSUCHGERÄT EINER RAKETE, DAS EIN SOLCHES VERFAHREN ANWENDET

ADAPTIVE METHOD FOR DETECTING A TARGET WITH A RADAR DEVICE IN THE PRESENCE OF STATIONARY INTERFERENCE, AND RADAR AND MISSILE SEEKER IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.05.2016 FR 1600880**

(43) Date de publication de la demande:
**06.12.2017 Bulletin 2017/49**

(73) Titulaire: **THALES**
**92400 Courbevoie (FR)**

(72) Inventeurs:
• **ENDERLI, Cyrille**
**78851 Elancourt Cedex (FR)**
• **MONTECOT, Marc**
**78851 Elancourt Cedex (FR)**
• **SCHAUB, Marie-Françoise**
**78851 Elancourt Cedex (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

• **BEAU S ET AL: "Taylor series expansions for airborne radar space-time adaptive processing", IET RADAR, SONAR AND NAVIGATION,, vol. 5, no. 3, 3 mars 2011 (2011-03-03), pages 266-278, XP006037884, ISSN: 1751-8792, DOI: 10.1049/IET-RSN:20100103**
• **WANG XIANGRONG ET AL: "Slow radar target detection in heterogeneous clutter using thinned space-time adaptive processing", IET RADAR SONAR NAVIGATION, THE INSTITUTION OF ENGINEERING AND TECHNOLOGY, UK, vol. 10, no. 4, 1 avril 2016 (2016-04-01), pages 726-734, XP006055805, ISSN: 1751-8784, DOI: 10.1049/IET-RSN.2015.0307**
• **DEGURSE JEAN-FRANCOIS ET AL: "Single dataset methods and deterministic-aided STAP for heterogeneous environments", 2014 INTERNATIONAL RADAR CONFERENCE, IEEE, 13 octobre 2014 (2014-10-13), pages 1-6, XP032746335, DOI: 10.1109/RADAR.2014.7060427**
• **SHTARKALEV BOGOMIL ET AL: "Multistatic single data set target detection in unknown coloured Gaussian interference", 2013 IEEE RADAR CONFERENCE (RADARCON13), IEEE, 29 avril 2013 (2013-04-29), pages 1-5, XP032479565, ISSN: 1097-5659, DOI: 10.1109/RADAR.2013.6585997 ISBN: 978-1-4673-5792-0 [extrait le 2013-08-23]**

(56) Documents cités:
**FR-A1- 3 011 085**

- KEMKEMIAN STEPHANE ET AL: "Sea clutter modelling for space-time processing", 2016 17TH INTERNATIONAL RADAR SYMPOSIUM (IRS), IEEE, 10 mai 2016 (2016-05-10), pages 1-6, XP032915860, DOI: 10.1109/IRS.2016.7497344

- J-L MILIN ET AL: "AMSAR - A European success story in AESA radar", IEEE AEROSPACE AND ELECTRONIC SYSTEMS MAGAZINE, IEEE SERVICE CENTER, PISCATAWAY, NJ, US, vol. 25, no. 2, 1 février 2010 (2010-02-01), pages 21-28, XP011306683, ISSN: 0885-8985

**Description**

La présente invention concerne un procédé de détection adaptative d'une cible par un dispositif radar en présence d'interférences stationnaires. L'invention se situe notamment dans le domaine des radars aéroportés et des autodirecteurs de missiles mettant en œuvre des traitements adaptatifs spatio-temporels.

Les radars aéroportés ont pour mission de détecter des cibles en présence d'échos parasites et/ou de brouillage. Les échos de sol se retrouvent en angle et en distance, et en Doppler en raison du déplacement du porteur. Un traitement adaptatif spatio-temporel est un filtrage qui exploite les échos d'une antenne réseau à commande de phase sur plusieurs impulsions cohérentes. Un tel traitement permet la détection d'une cible se déplaçant à basse vitesse dans un fouillis de sol ou un brouillage électronique. Il analyse les variations spatiales et temporelles des échos. A la différence de méthodes de filtrage utilisant des algorithmes basés sur le premier ordre statistique des caractéristiques des échos, un traitement adaptatif spatio-temporel utilise le second ordre de ces statistiques. En effet, la détection d'une cible dans une porte distance n'est pas confinée à l'analyse des données dans cette porte distance mais utilise les données des portes distances adjacentes (données secondaires).

Ces traitements adaptatifs présentent cependant des inconvénients. En particulier, un problème à résoudre est la désensibilisation de ces traitements lorsqu'un signal utile provenant d'une cible est présent dans les données d'estimation de la fonction de corrélation des parasites. En effet, le signal utile est alors lui-même considéré comme un signal parasite.

Dans l'état de l'art ce problème est résolu en utilisant les portes distances voisines de la porte distance où est effectuée la détection. Cette solution n'est pas applicable aux formes d'ondes où une seule porte distance est disponible, par exemple avec des facteurs de formes élevés, supérieurs à 25%, et en absence de modulations. Quand elle est applicable, la solution est mise en défaut principalement dans les deux cas de figure suivants :

- Les parasites dans les données d'estimation ne sont pas suffisamment représentatifs de ceux de la porte distance sous test, ce qui arrive notamment avec les formes d'onde présentant beaucoup d'ambiguïtés en distance ou dans certaines zones des cartes de mesures du radar ;
- Le rapport signal à bruit est suffisamment élevé pour générer des lobes secondaires en distance qui ne sont pas négligeables dans les données d'estimation.

Dans le cas particulier de l'antibrouillage des brouilleurs déportés, le problème peut être résolu en utilisant les données obtenues dans une phase d'écoute où le radar en réception seule ne capte pas d'échos de cibles. Cette solution ne traite pas les échos du sol et est par ailleurs inefficace face au brouillage déclenché par l'arrivée d'impulsions radar. D'autres approches dites « sans données secondaires » ou « à unique jeu de données » proposent des traitements qui résolvent partiellement le problème. Avec ces approches, la désensibilisation du radar reste importante, notamment à moyen ou fort rapport signal à bruit et en présence d'erreurs, même faibles, de pointage angulaire du radar sur la cible, d'hypothèse Doppler ou de calibrage du réseau.

Un document FR 3 011 085 A1 divulgue un procédé de détection de cibles. Un document Beau et al : « Taylor serie expansions for airborne radar space-time adaptive processing », IET RADAR, SONAR AND NAVIGATION, IEE, 13 octobre 2014, pages 1-6, divulgue un procédé de détection radar adaptative.

Un but de l'invention est notamment de pallier les inconvénients précités.

A cet effet, l'invention a pour objet un procédé de détection adaptative d'une cible par un dispositif radar en présence d'interférences stationnaires, ledit radar étant équipé d'une antenne réseau, le procédé comportant :

- une étape de détermination d'un ensemble de vecteurs de pointage décrivant chacun une hypothèse d'arrivée angulaire et une hypothèse de pointage Doppler d'un signal utile reçu ;
- pour chaque vecteur de pointage, une étape d'approximation d'un signal utile reçu dans un voisinage en angle et en Doppler autour dudit vecteur produisant un modèle spatio-temporel approximé au voisinage de chacun desdits vecteurs de pointage ;
- une étape de détection par comparaison, avec un seuil donné, d'une caractéristique statistique d'un signal reçu de ladite cible au voisinage d'un vecteur de pointage avec le modèle spatio-temporel correspondant audit voisinage ;

ledit modèle étant temporel, ladite caractéristique statistique, notée $\ell_{\text{TSA-MLED}}$, étant définie comme suit :

$$\ell_{\text{TSA-MLED}} = \frac{(2-q_1-q_2)\frac{y}{\Delta} - (|a_1|^2+|a_2|^2)}{\Delta g+y}$$

où les coefficients sont :

$$a_1 = \frac{1}{N'} C_0^* \widehat{R}^{-1} z_1$$

$$a_2 = \frac{1}{N'} C_0^* \widehat{R}^{-1} z_2$$

$$q_1 = \frac{1}{N'} z_1^* \widehat{R}^{-1} z_1$$

$$q_2 = \frac{1}{N'} z_2^* \widehat{R}^{-1} z_2$$

$$g = \frac{1}{N'} C_0^* \widehat{R}^{-1} C_0$$

$$r = \frac{1}{N'} z_1^* \widehat{R}^{-1} z_2$$

$$\Delta = (1 - q_1)(1 - q_2) - |r|^2$$

$$y = (1 - q_2)|a_1|^2 + (1 - q_1)|a_2|^2 + r a_1 \overline{a_2} + r a_2 \overline{a_1}$$

$C_0$ étant le vecteur de pointage défini par ses hypothèses angulaires $(u_0, v_0)$ et son hypothèse de pointage Doppler $(f_0)$ ;

$\widehat{R}$ étant la matrice de covariance estimée des données spatio-temporelles $X$ du signal reçu ;

$z_1$ et $z_2$ étant les deux colonnes de la matrice $Z_{f_0} = X \overline{H}_r (H_r^T \overline{H}_r)^{-\frac{1}{2}}$

$H_r$ étant une matrice d'approximation à deux colonnes, la première colonne étant constituée des composantes dudit développement de Taylor au premier ordre de l'hypothèse de pointage Doppler $f_0$ et la deuxième colonne étant constituée des composantes de la dérivée par rapport à la fréquence audit pointage Doppler.

Ladite caractéristique statistique est par exemple basée sur l'estimation du maximum de vraisemblance. L'approximation spatiale au voisinage d'un vecteur de pointage est par exemple effectuée par une interpolation de Lagrange dudit vecteur. L'approximation temporelle au voisinage d'un vecteur de pointage est par exemple obtenue par un développement de Taylor au premier ordre de l'hypothèse de pointage Doppler dudit vecteur.

Ladite caractéristique statistique, notée $\ell_{\text{ASA-MLED}}$, peut être également définie comme suit :

$$\ell_{\text{ASA-MLED}} = \frac{q_2}{(1 - q_1)(1 - q_1 + q_2)}$$

où

$$q_1 = \overline{X}_{f_0}^* \widehat{R}^{-1}$$

$$q_2 = \overline{X}_{f_0}^* \widehat{R}^{-1} H (H^* \widehat{R}^{-1} H)^{-1} H^* \widehat{R}^{-1} \overline{X}_{f_0}$$

$\widehat{R}$ étant la matrice de covariance estimée des données spatio-temporelles $X$ du signal reçu ;

$\overline{X}_{f_0}$ est la transformée de Fourier en l'hypothèse de pointage Doppler $f_0$ ;

$H$ est une matrice d'approximation obtenue par approximation comme définie précédemment.

L'invention a également pour objet un radar aéroporté et/ou un autodirecteur de missile aptes à mettre en œuvre un tel procédé.

D'autres caractéristiques et avantages de l'invention apparaîtront à l'aide de la description qui suit, faite en regard de dessins annexés qui représentent :

- La figure 1, une structure d'antenne à 8 sous-réseaux ;
- La figure 2, des valeurs du rapport signal à fouillis pour 100 tirages d'échos de sol ;
- La figure 3, la densité empirique de test avec une cible de SNR de 100 dB et une valeur typique de seuil ;
- La figure 4, la densité empirique de test, pour un SNR de 100 dB, la cible étant décalée en vitesse d'1/4 de filtre (visée et cible dans l'axe) ;
- La figure 5, la densité empirique de test avec une cible de SNR de 100 dB, décalée en angle (visée dans l'axe) ;
- Les figures 6a et 6b, respectivement une carte des échos de sol en distance/Doppler dans la voie somme et la probabilité de détection en fonction du SNR pour AMF sans données secondaires ;
- Les figures 7a et 7b, respectivement des erreurs relatives d'interpolation constante et linéaire ;
- Les figures 8a et 8b, respectivement des erreurs relatives d'interpolation de Lagrange 4 points et 9 points ;
- Les figures 9a et 9b, respectivement une carte des échos de sol en distance/Doppler dans la voie somme et la probabilité de détection en fonction du SNR ;
- Les figures 10a et 10b, respectivement les performances AMF et GMLED ;
- La figure 11, un schéma d'une première mise en œuvre du TSA-MELD ;
- La figure 12, un schéma d'une deuxième mise en œuvre du TSA-GMLED ;
- Les figures 13a et 13b, la relation empirique du seuil par rapport à la probabilité de fausse alarme $P_{fa}$ estimée sur $5.10^5$ tirages pour un détecteur GLRT temporel et pour un détecteur TSA- MELD ;
- Les figures 14a et 14b, la probabilité de détection $P_d$ en fonction du SNR pour un détecteur GLRT temporel et pour un détecteur TSA- MELD ;
- Les figures 15a et 15b, $P_d$ en fonction du SNR pour un détecteur du type « Stop-Band APES », et pour des détecteurs GLRT, TSA-MLED et hybride.

Avant de décrire plus en détail l'invention, on commence par exposer de façon plus précise le problème de la détection adaptative sans données secondaires. Dans un premier temps on définit les notations employées par la suite, puis on montre les limites d'un traitement standard de détection adaptative sans données secondaires quand le pointage sur la cible est imparfait.

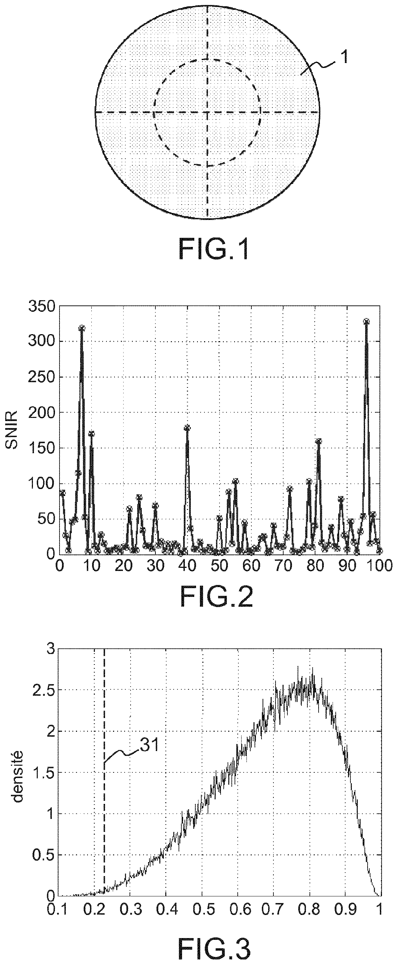

On considère un radar à antenne active avec P voies spatiales de réception. Pour fixer les idées, on peut considérer l'exemple de la découpe spatiale amsar issue de [1] où P voies sont réparties sur une surface rayonnante approximativement circulaire de diamètre 60cm, comme illustré sur la **figure 1.** Dans l'exemple de la figure 1, P = 8, l'antenne est alors divisée en 8 sous-réseaux 1.

Après filtrage et échantillonnage à la bande passante du radar, le signal $\mathbf{Y}_n$ à la récurrence *n* dans une porte distance s'écrit :

$$\mathbf{Y}_n = \alpha \mathbf{G} e^{i2\pi n \upsilon T_r} + \mathbf{W}_n \quad , \quad n = 0...N\text{-}1 \,, \qquad (\mathbf{1})$$

où :

- N est le nombre d'impulsions ;
- $\alpha$ est l'amplitude complexe (inconnue) de la cible ;
- **G** est le vecteur des gains complexes des sous-réseaux dans la direction de la cible ;
- v est la fréquence Doppler associée à la cible ;
- $T_r$ est la période de récurrence des impulsions et ;
- $\mathbf{W}_n$ est le signal des échos de sol classiquement supposé Gaussien, centré, et stationnaire, sa matrice d'autocorrélation étant notée $\mathbf{Q}_0$.

La modélisation habituelle des échos de sol comprend la corrélation temporelle d'impulsion à impulsion des retours de sol, supposés stationnaires. La matrice de corrélation entre $\mathbf{W}_n$ et $\mathbf{W}_{n+s}$ est notée $\mathbf{Q}_\delta$ et ne dépend pas de l'indice temporel *n*. Si on désigne par P le nombre de sous réseaux (par exemple P=8), les vecteurs $\mathbf{Y}_n$, **G** et $\mathbf{W}_n$ sont de taille P et les matrices $\mathbf{Q}_0$, $\mathbf{Q}_\delta$ sont de taille PxP. Dans le cas d'un brouillage à bruit, le signal d'interférence est habituellement supposé dé-corrélé temporellement ce qui signifie que dans ce cas $\mathbf{Q}_\delta = \mathbf{0}$ pour $\delta > 0$.

Pour prendre en compte les corrélations temporelles des échos parasites tels que les échos de sol, on se donne classiquement un horizon temporel glissant de L récurrences au-delà duquel on néglige la corrélation des retours de sol. Généralement L est très inférieur à N (L<<N), L étant généralement de l'ordre de la dizaine voire moins alors que N est de l'ordre de la centaine voire plus. Les données spatio-temporelles $\mathbf{X}_n$ dans cet horizon sont constituées des

vecteurs ($\mathbf{Y}_n$, ..., $\mathbf{Y}_{N+L-1}$) concaténés en un seul vecteur de taille PL :

$$X_n = [Y_n^*, ..., Y_{n+L-1}^*]^* \quad , \quad n = 0...\text{N-L} \ , \qquad \textbf{(2)}$$

le signe * désignant la transposition et conjugaison d'un vecteur ou une matrice complexe.

On définit de même le vecteur de pointage (« *steering vector* ») spatio-temporel, **C**, et la matrice d'autocorrélation spatio-temporelle associée au fouillis, **Q**, avec une notation par blocs :

$$C = \left[ G, \left(G e^{i2\pi v T_r}\right)^*, ..., \left(G e^{i2\pi(L-1)v T_r}\right)^* \right]^* \quad , \quad \textbf{(3)}$$

et

$$Q = \begin{bmatrix} Q_0 & Q_1 & ... & Q_{L-1} \\ Q_1^* & Q_0 & ... & ... \\ ... & ... & ... & Q_1 \\ Q_{L-1}^* & ... & Q_1^* & Q_0 \end{bmatrix} . \qquad \textbf{(4)}$$

De même les échantillons spatio-temporels de fouillis sont ($\mathbf{V}_0$, ..., $\mathbf{V}_{N-L}$) tels que :

$$V_n = [W_n^*, ..., W_{n+L-1}^*]^* \quad , \quad n = 0...\text{N-L} \ , \qquad \textbf{(5)}$$

et les données spatio-temporelles sont modélisées par :

$$X_n = \alpha C e^{i2\pi n v T_r} + V_n \quad , \quad n = 0...\text{N-L} . \qquad \textbf{(6)}$$

Avec une fenêtre glissante de taille L, les vecteurs spatio-temporels $\mathbf{X}_n$ sont au nombre de (N-L+1). Dans toute la suite on notera N' = N-L+1. Le vecteur de pointage **C** dépend de la direction (u,v) de la cible et de son Doppler v. Cette dépendance peut être explicitée en écrivant **C** = **C**(u,v,f) où par commodité on note *f* la fréquence Doppler ramenée au pas de quantification $(NT_r)^{-1}$ en fréquence, soit

$$f = v\text{NT}_r \in [0,\text{N}[ \qquad \textbf{(7)}$$

possiblement non entier.

Pour des hypothèses angulaires ($u_0$, $v_0$) et une hypothèse Doppler $f_0/(NT_r)$, avec $f_0$ = 0,...,N-1, le traitement classique consiste à comparer le nombre T suivant à un seuil : où

$$T = \frac{\left| C(u_0,v_0,f_0)^* \widehat{R}^{-1} \overline{X}_{f_0} \right|^2}{C(u_0,v_0,f_0)^* \widehat{R}^{-1} C(u_0,v_0,f_0)} \qquad \textbf{(8)}$$

et

$$\overline{X}_{f_0} = \frac{1}{N'} \sum_{n=0}^{N-L} X_n e^{-i2\pi \frac{n f_0}{N}} \qquad \textbf{(9)}$$

$$\widehat{R} = \frac{1}{N'} \sum_{n=0}^{N-L} X_n X_n^* \qquad \textbf{(10)}$$

A un facteur constant près, le test de référence correspond au test obtenu en supposant connaître la matrice d'autocorrélation **Q** (cf.(**4**)) puis en lui substituant une estimation $\widehat{R}$ au sens du maximum de vraisemblance. C'est un traitement du type rapport de vraisemblance généralisé en deux étapes connu dans les publications sous le nom de « *Adaptive Matched Filter* » (AMF) [2] dans le cas où des données secondaires d'estimation de **Q** sont disponibles en nombre suffisant.

Ici, on se place dans une application du traitement AMF « sans données secondaires » puisqu'on utilise les mêmes données pour estimer **Q** et tester la présence d'une cible. Cette approche est pertinente en particulier dans les modes air/air très ambigus en distance pour lesquels la matrice **Q** n'est pas homogène d'une porte distance à l'autre (les données d'une porte distance ne pouvant alors pas être utilisées pour estimer **Q** dans une autre porte distance), ou encore dans certains autodirecteurs de missiles où les formes d'onde sont telles qu'une seule porte distance est disponible pour assurer les boucles de poursuite.

La cible doit avoir une puissance faible par rapport à la puissance des parasites pour permettre en première approximation de négliger sa contribution dans l'estimation de **Q**. Cette hypothèse est généralement vérifiée pour des cibles usuelles à moyenne ou grande distance. Cependant, l'approche ci-dessus atteint ses limites quand la puissance de la cible devient grande et que les paramètres de la cible (u,v,f) ne sont pas exactement égaux aux hypothèses Doppler et angulaire $(u_0, v_0, f_0)$, ce qui est toujours le cas en pratique.

A titre d'illustration, on suppose dans un premier temps que les hypothèses Doppler et angulaires du traitement coïncident exactement avec les paramètres de la cible, et que le vecteur de pointage **C** est parfaitement connu (calibré). Dans ce cas particulier, on peut calculer le rapport entre la puissance du signal cible et la puissance du signal de parasite (rapport signal à fouillis). On montre que celui-ci est une fonction F de l'amplitude complexe $\alpha$ de la cible, du vecteur de pointage $\mathbf{C} = \mathbf{C}(u,v,f) = \mathbf{C}(u_0,v_0,f_0)$, de la transformée de Fourier $\overline{V}_{f_0}$ des échantillons de fouillis à l'hypothèse Doppler $f_0$ :

$$\overline{V}_{f_0} = \frac{1}{N'} \sum_{n=0}^{N-L} V_n e^{-i2\pi \frac{nf_0}{N}} \qquad (11)$$

et de la matrice d'autocorrélation estimée $\hat{Q}$ des échantillons de fouillis, i.e.

$$\hat{Q} = \frac{1}{N'} \sum_{n=0}^{N-L} V_n V_n^* \qquad (12)$$

Si on s'intéresse au cas où la puissance de la cible devient très grande, c'est à dire quand $|\alpha|^2 \to \infty$, on montre que le rapport signal à fouillis F tend vers la valeur suivante qui est non nulle :

$$F \xrightarrow[|\alpha|^2 \to \infty]{} \frac{1}{\left( \overline{V}_{f_0}^* \hat{Q}^{-1} \overline{V}_{f_0} - \frac{\left| c^* \hat{Q}^{-1} \overline{V}_{f_0} \right|^2}{c^* \hat{Q}^{-1} c} \right)^2} \qquad (13)$$

Par exemple la **figure 2** représente 100 valeurs calculées selon (**13**) à partir de tirages aléatoires d'échos de sol, marquées par des cercles. Le nombre d'impulsions est N = 128, le nombre de retards est L = 6, et l'altitude, la vitesse et les angles de visée du radar sont respectivement 10.000 ft (pieds), 240 m/s, et (0°; 0°). Sur la même figure on représente, pour les mêmes tirages d'échos de sol, les valeurs du rapport signal à fouillis obtenues directement, c'est-à-dire via la formule :

$$|\alpha|^2 \frac{\left| c^* \hat{R}^{-1} c \right|^2}{\left| c^* \hat{R}^{-1} \overline{V}_{f_0} \right|^2} ,$$

où le rapport signal sur bruit (SNR) de la cible est 100 dB et où $\hat{R}$ et $\overline{V}_{f_0}$ sont donnés par (**10**), (**6**) et (**11**). L'estimée $\hat{R}$ est calculée avec les tirages aléatoires d'échos de sol et l'écho de cible, elle dépend donc de $\alpha$. Les valeurs empiriques sont représentées sur la **figure 2** avec des croix.

Les valeurs calculées des deux manières coïncident ce qui permet de valider (**13**). On s'aperçoit que les plus petites valeurs sont de l'ordre de 4 dB ce qui doit permettre de conserver une bonne probabilité de détection aux $P_{fa}$ (probabilité de fausses alarmes) usuelles.

La **figure 3** représente la densité empirique des valeurs du test (**8**), pour $10^5$ tirages d'échantillons de fouillis, avec une cible de SNR = 100 dB.

Sur l'histogramme on indique de plus en traits pointillés 31 une valeur typique de seuil de détection sur bruit thermique, correspondant à une probabilité de fausse alarme de $10^{-4}$ (soit un seuil de 0.23 calculé par ailleurs). On constate que dans la majorité des cas la cible est détectée. Un calcul plus précis montre que sur cet exemple la probabilité de détection est de 0.998, ce qui est une désensibilisation négligeable due à la présence de la cible.

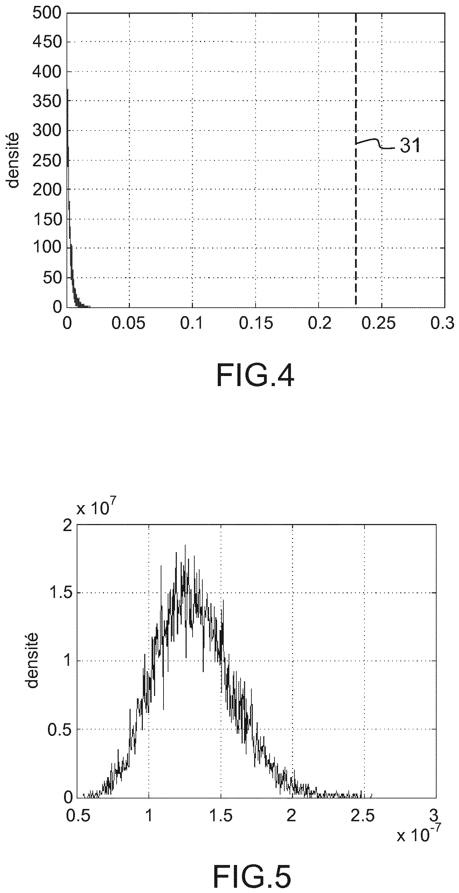

Les résultats précédents sont valables quand le vecteur de pointage **C** est parfaitement connu. En pratique ce n'est pas le cas, d'une part en raison de la quantification des paramètres angulaires et Doppler (la position de la cible n'est jamais exactement une des valeurs quantifiées pour faire le test de détection), et d'autre part en raison d'un calibrage plus ou moins bon du réseau qui implique une incertitude sur les gains complexes des sous-réseaux. Quand le vecteur de pointage associé à la cible diffère légèrement du vecteur de pointage utilisé pour détecter, la perte de performance n'est plus négligeable comme le montre l'exemple illustré par la **figure 4.**

Si on suppose que la cible, de SNR 100 dB, est décalée en vitesse d'un quart de filtre Doppler par rapport à l'hypothèse Doppler du radar (f = $f_0$ + 1/4), on obtient la densité empirique du test (**8**) représentée par cette figure 4 ($10^4$ tirages).

La même valeur de seuil 31 que sur la figure 3 est reportée sur la figure 4. Dans ce cas la probabilité de détection tombe à 0 ce qui montre que le détecteur (**8**) n'est pas robuste aux erreurs de Doppler. Il n'est pas non plus robuste aux erreurs angulaires car si on suppose que la cible est décalée par exemple de 8.7 mrad (0.5°) et 5.2 mrad (0.3°) par rapport à l'axe de visée du radar, la densité empirique du test (**8**) est concentrée autour de valeurs très faibles (de l'ordre de $10^{-7}$) comme le montre la **figure 5.**

La valeur du seuil n'est pas indiquée sur la figure 5 car elle est trop éloignée des valeurs prises par le test. De même que pour les erreurs en Doppler, la probabilité de détection en présence d'erreurs angulaires tombe à 0 ce qui montre la non-robustesse du test aux erreurs angulaires.

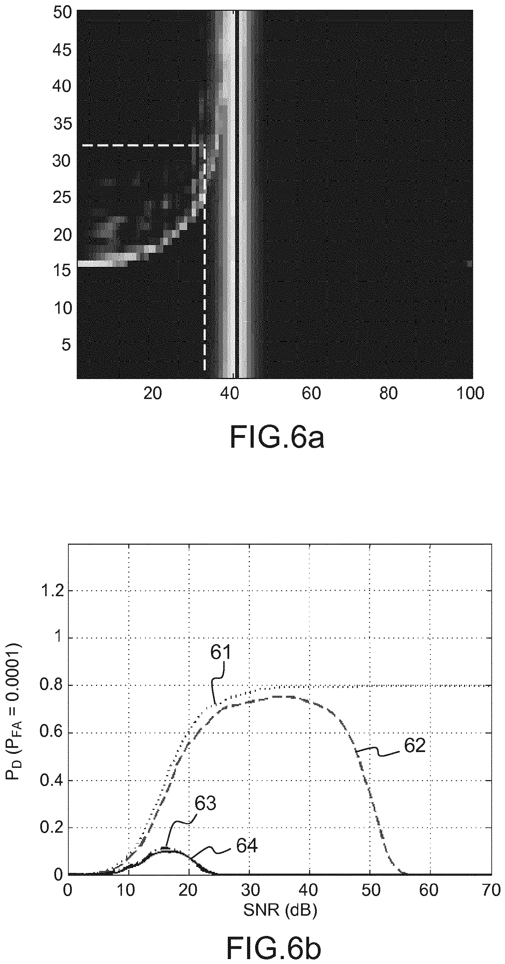

Enfin, la **figure 6a** représente la probabilité de détection en fonction du rapport signal à bruit, pour une probabilité de fausse alarme de $10^{-4}$ dans un cas typique aéroporté en présence de fouillis de sol. La forme d'onde émise est un train de N = 100 impulsions périodiques, chacune de durée 2.5 $\mu$s et espacée de $T_r$ = 25 $\mu$s. La bande radar est 2 MHz ce qui apporte 5 résolutions distance par durée d'impulsion et 50 résolutions distance par récurrence.

La figure 6a représente la carte des échos de sol en distance et fréquence Doppler dans la voie somme de l'antenne. Dans cet exemple, une cible est supposée se trouver dans la porte distance n°32 et le filtre Doppler n°33 comme indiqué en pointillés, ce qui est une localisation où le fouillis de sol est relativement important.

Les quatre courbes représentées sur la **figure 6b** correspondent aux cas sans erreurs de pointage (courbe 61), avec une erreur de pointage en Doppler de 12.5% de largeur de filtre (courbe 62), avec des erreurs de pointage angulaire en site et gisement de 34% et 17% d'ouverture respectivement (courbe 63), et avec des erreurs de pointage Doppler et angulaires (courbe 64). Sans erreurs de pointage, la probabilité de détection tend sur cet exemple vers la valeur 0.8 en raison de (**13**). Avec des erreurs en Doppler et/ou en angle, outre les pertes de désadaptation, la probabilité de détection rechute rapidement à 0 sans dépasser 0.1 dans le pire des cas ci-dessus.

Pour conserver les avantages de l'approche sans données secondaires, il faut tenir compte des erreurs de pointage dans la modélisation du signal, de manière à limiter le plus possible les pertes associées. Dans les lignes qui suivent, on explique un moyen général d'y parvenir, avec les traitements existants et leurs limitations.

Comme cela sera décrit par la suite, pour tenir compte des erreurs de pointage, la solution selon l'invention consiste à remplacer, dans le modèle classique (**1**) ou (**6**), le vecteur de pointage **C,** vu comme une fonction vectorielle inconnue, par une approximation locale bien choisie. En fonction des conditions d'utilisation de l'invention et des moyens de calibrage, entre autres, différents choix sont possibles. D'une manière générale, l'approximation de **C** s'écrit sous la forme suivante, dans un voisinage $V(u_0,v_0,f_0)$ des hypothèses $(u_0,v_0,f_0)$ :

$$C(u,v,f) \approx H\,\phi(u,v,f) \qquad (u,v,f) \in V(u_0,v_0,f_0) \qquad \textbf{(14)}$$

où **H** et $\phi(.)$ dépendent de la structure de réseau antennaire et du type d'approximation choisi pour **C**. L'avantage d'une telle approche est de remplacer la fonction inconnue **C** par ;

- une matrice **H** connue et fixée à l'avance, soit par modélisation ou calcul, soit par calibrage du réseau antennaire (à coût significativement moindre que la calibration de la totalité de la fonction **C**), et ;
- une fonction vectorielle $\phi$ dont le nombre de composantes est généralement beaucoup plus petit que celui de **C** et dont la forme (i.e. l'expression analytique) est connue.

Par exemple, une approximation simple, pour la détection, consiste à remplacer les paramètres de la cible (u,v,f) par les hypothèses Doppler et angulaires $(u_0,v_0,f_0)$, comme dans le traitement de référence (**8**) par exemple. Dans ce cas, **H** est la matrice à une seule colonne égale à $C(u_0,v_0,f_0)$, calibrée à un certain niveau de quantification des hypothèses angulaires pour une longueur d'onde donnée, et $\phi$ est la fonction à une seule composante, constante et égale à 1. Il s'agit d'une approximation « constante par morceaux ».

Une autre approximation qui peut être faite, pour les mesures d'écartométries angulaires, consiste à substituer à **C**(u,v,f) son développement de Taylor au voisinage des hypothèses $(u_0,v_0,f_0)$, comme dans [3] par exemple. Si on néglige l'erreur de Doppler ($f{\approx}f_0$), **H** est une matrice à 3 colonnes :

$$H = \begin{bmatrix} C(u_0, v_0, f_0) & \dfrac{\partial C}{\partial u}(u_0, v_0, f_0) & \dfrac{\partial C}{\partial v}(u_0, v_0, f_0) \end{bmatrix} \qquad (15)$$

et $\phi$ est une fonction linéaire :

$$\phi(u,v) = \begin{pmatrix} 1 \\ u - u_0 \\ v - v_0 \end{pmatrix} \qquad (16)$$

Si on veut prendre en compte les erreurs Doppler, il suffit de rajouter les éléments correspondants dans une quatrième colonne de **H** et une quatrième composante de $\phi$. Avec P=8 voies et L=6 retards, le vecteur de pointage **C** a 48 composantes alors que $\phi$ n'en a qu'au plus 4. L'avantage de l'approximation de Taylor est son caractère linéaire : la linéarité de la fonction $\phi$ la rend simple à inverser pour retrouver les mesures d'écartométries à partir d'une estimation de $\phi$. Son inconvénient est que l'approximation devient trop grossière sur les bords de l'ouverture d'antenne. C'est pourquoi d'autres approximations peuvent être envisagées. Par exemple, si on veut une erreur d'approximation nulle pour $k+1$ hypothèses prédéfinies $(u_0,v_0,f_0)$, ..., $(u_k,v_k,f_k)$ dans le voisinage $V(u_0,v_0,f_0)$, une approximation intéressante est l'interpolation de Lagrange [4]. Dans ce cas la matrice H possède $k+1$ colonnes qui sont les vecteurs de pointage calibrés aux $k+1$ hypothèses de référence :

$$H = \begin{bmatrix} C(u_0, v_0, f_0) & ... & C(u_k, v_k, f_k) \end{bmatrix} \qquad (17)$$

et les composantes de la fonction $\phi$ sont les polynômes interpolateur de Lagrange aux points $(u_0,v_0,f_0)$, ..., $(u_k,v_k,f_k)$ dont l'expression est connue (voir notamment [5]) :

$$\phi(u,v,f) = \begin{pmatrix} \mathcal{L}_0(u,v,f) \\ ... \\ \mathcal{L}_k(u,v,f) \end{pmatrix} \qquad (18)$$

avec l'extension multi-variée des polynômes interpolateurs de Lagrange suivante :

$$\mathcal{L}_i(u,v,f) = \left( \prod_{r:u_r \neq u_i} \frac{(u-u_r)}{(u_i-u_r)} \right) \left( \prod_{s:v_s \neq v_i} \frac{(v-v_s)}{(v_i-v_s)} \right) \left( \prod_{t:f_t \neq f_i} \frac{(f-f_t)}{(f_i-f_t)} \right) \qquad (19)$$

L'interpolation de Lagrange est une manière simple et directe d'approcher localement la réponse angulaire du réseau, nécessitant le calibrage de l'antenne en quelques angles de référence autour de l'angle de visée. En absence de contrainte ou de préconisation particulière sur le choix des points de référence, un choix judicieux par défaut est de prendre les racines des polynômes de Tchebychev [4,6] sur chacun des voisinages des paramètres pris individuellement, car ce choix garantit une bonne approximation en bornant l'erreur maximale d'approximation par une valeur tendant rapidement vers 0 avec le nombre de points d'interpolation pour une large classe de fonctions. C'est un choix qui évite d'être confronté au phénomène de Runge [6] caractérisé par de fortes oscillations des polynômes interpolateurs entre deux points de référence. Les racines des polynômes de Tchebychev sont explicites - on montre que pour $k+1$ points d'interpolation sur [-1 ; 1] elles sont égales à $\cos \dfrac{2i+1}{2k+2}\pi$ , i=0...k - et peuvent par ailleurs initialiser des algorithmes de calcul des points d'interpolation optimaux, tels que l'algorithme de Rémez [7].

Un autre choix possible provient du fait que la réponse d'une cible en fréquence Doppler est plus particulière et mieux connue que la réponse angulaire du réseau car elle correspond à un déphasage d'impulsion à impulsion crée par la cinématique entre le radar et la cible [8]. On peut ainsi séparer le paramètre $f$ des paramètres angulaires $u$ et $v$ en notant :

$$C(u,v,f) = C_t(f) \otimes C_s(u,v) \qquad (20)$$

où le symbole $\otimes$ désigne le produit de Kronecker et où les indices « t » et « s » font référence aux composantes temporelle et spatiale du vecteur de pointage **C.** La composante spatiale $\mathbf{C}_s$ correspond à la réponse angulaire du réseau. Sa taille est égale au nombre P de voies de réception. La composante temporelle $\mathbf{C}_t$ a une forme connue localement pour f autour de l'entier $f_0$ qui indexe le Doppler de la cible :

$$C_t(f) = C_t(f_0 + \delta) = \left[ e^{i2\pi \frac{l(f_0+\delta)}{N}} \right], \quad l = 0 \ldots L-1, \quad \delta \in \left[ -\frac{1}{2}; +\frac{1}{2} \right] \qquad (21)$$

Sa taille est le nombre L de retards. En approchant les approximations temporelles et spatiales de manière similaire à (**14**) :

$$C_t(f) \approx H_t \phi_t(f) \qquad (22)$$

$$C_s(u,v) \approx H_s \phi_s(u,v) \qquad (23)$$

et en utilisant une propriété classique des produits de Kronecker et matriciels, une particularisation possible de (**14**) est :

$$H = H_t \otimes H_s \qquad (24)$$

$$\phi(u,v,f) = \phi_t(f) \otimes \phi_s(u,v) \qquad (25)$$

L'avantage de séparer les paramètres de fréquence et d'angles permet d'utiliser des méthodes d'approximation adaptées à chacune des composantes $\mathbf{C}_t$ et $\mathbf{C}_s$. Ainsi, l'interpolation de Lagrange se prête bien à une calibration de la réponse mal connue $\mathbf{C}_s$ du réseau en quelques points de visée, alors que la forme connue de $\mathbf{C}_t$ (au paramètre *f* près) permet une approximation par des méthodes optimales, comme par exemple le développement de Karhunen-Loève [**9**] si on cherche une approximation optimale en moindre carrés. L'inconvénient est de perdre en souplesse dans l'échantillonnage du domaine angle/Doppler puisque la dimension de l'approximation (i.e. les colonnes de **H** dans (**14**)) est le produit des dimensions des approximations spatiale et temporelle (i.e. les colonnes de $\mathbf{H}_s$ et $\mathbf{H}_t$ dans (**24**)).

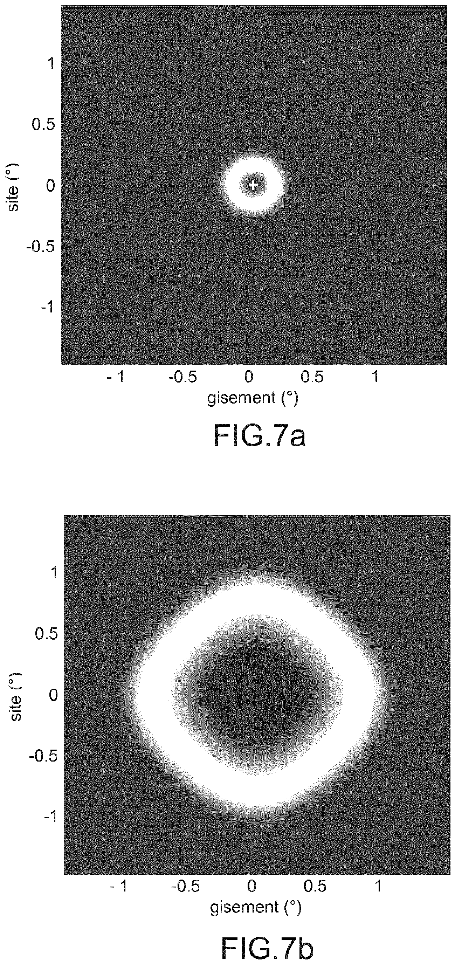

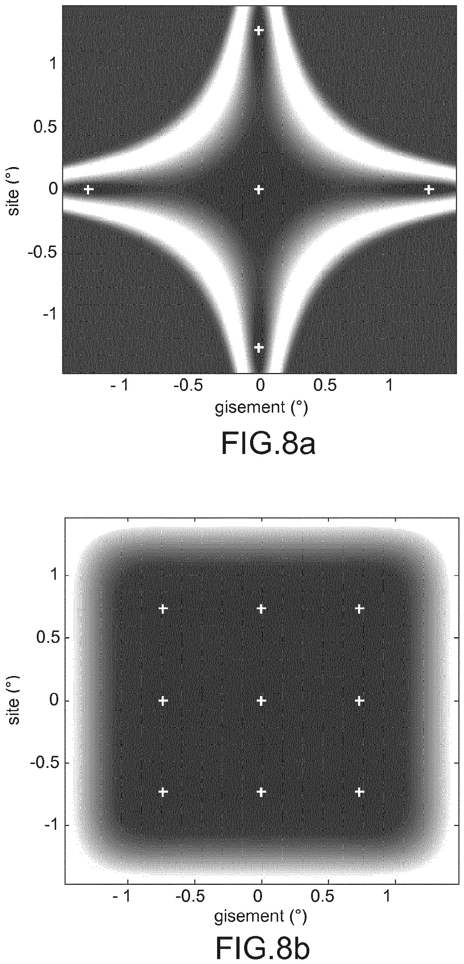

Pour illustrer l'approximation du la partie spatiale $\mathbf{C}_s$ du vecteur de pointage, les figures 7a, 7b, 8a et 8b représentent les erreurs relatives : $\|\mathbf{C}_s - \mathbf{H}_s \phi_s\| / \|\mathbf{C}_s\|$ (en %) des interpolations constantes, linéaires et de Lagrange, quand les hypothèses angulaires varient dans l'ouverture de la voie somme de l'antenne AMSAR (figure 1). La dynamique de l'affichage a été limitée à l'erreur relative de 10%.

Sur la **figure 7a** on observe l'apport de l'interpolation linéaire sur le domaine de validité de l'approximation par rapport à l'interpolation constante. La **figure 8a** montre que l'interpolation de Lagrange à 4 points (repérés par des croix blanche et situés aux racines des polynômes de Tchebychev sur les deux axes) permet d'étendre le domaine de validité de l'approximation le long des axes de gisement et site en comparaison de la **figure 7b**. Sur la **figure 8b** l'utilisation de 9 points d'interpolation permet d'avoir une erreur relative inférieure à 4% sur toute l'ouverture de l'antenne.

Si on reporte l'approximation locale (**14**) du vecteur de pointage **C** dans le modèle du signal reçu (**6**), on obtient :

$$X_n \approx \alpha H \phi(u,v,f) e^{i2\pi \frac{nf}{N}} + V_n \quad , \quad n = 0 \ldots N\text{-}L \qquad (26)$$

où la matrice **H** et la forme paramétrique de la fonction $\phi$ en fonction des paramètres (u,v,f) de la cible sont supposées connues pour l'antenne utilisée par le radar. La matrice **H** dépend du pointage ($u_0, v_0, f_0$) mais cette dépendance est implicite dans (**26**) pour alléger les notations. Dans (**26**) la fréquence Doppler *f* de la cible (donnée par (**7**)), inconnue, reste explicite dans le déphasage d'impulsion à impulsion le long de la rafale des (N-L) impulsions. L'expérience montre que l'erreur de pointage en Doppler s'accumule pendant le train d'impulsions reçues et a un impact sur les performances du radar. Pour prendre en compte entièrement les erreurs de pointage Doppler, on procède exactement comme avec le vecteur de pointage **C** : on considère le vecteur de pointage temporel à l'échelle de la rafale, de taille (N-L+1), noté :

$$C_r(f) = \left[1, e^{i2\pi\frac{f}{N}}, \dots, e^{i2\pi\frac{(N-L)f}{N}}\right]^T \qquad (27)$$

que l'on approche par

$$C_r(f) \approx H_r \phi_r(f) \qquad (28)$$

dans un voisinage de $f_0$, de manière similaire à (14), (22) et (23).

De même que $H_t$ dans (22), la matrice $H_r$ dépend du pointage Doppler $f_0$. La collection des vecteurs $X_n$ donnés par (26) s'écrit alors :

$$[X_0, \dots, X_{N-L}] \approx \alpha H B H_r^T + [V_0, \dots, V_{N-L}] \qquad (29)$$

avec

$$B = \phi(u, v, f)\phi_r^T(f) \,,$$

qui est une fonction matricielle, en général non linéaire, du triplet de paramètres inconnus (u,v,f) associés à la cible, et valable dans un voisinage du pointage $(u_0, v_0, f_0)$.

Le problème de détection qu'on veut résoudre consiste alors à tester la nullité du paramètre complexe inconnu $\alpha$ dans (29), pour des paramètres (u,v,f) dans un voisinage d'une hypothèse $(u_0, v_0, f_0)$, et avec un signal parasite $(V_n)_{n=0\dots N-L}$ Gaussien complexe centré de matrice d'autocorrélation $Q$ inconnue.

Formulé par l'intermédiaire de (29), le problème technique rentre dans le cadre très général de la détection de signaux multidimensionnels, traité en profondeur dans un travail de Kelly en 1989 [10] basé sur le principe du rapport de vraisemblance généralisé (GLRT, *Generalized Likelihood Ratio Test*) [11]. Sous l'hypothèse (fausse mais nécessaire pour surmonter les difficultés d'établissement d'un traitement de détection) que les vecteurs de fouillis de sol $V_0$, ..., $V_{N-L}$ sont indépendants, la solution générale consiste à comparer le quotient de déterminants ci-dessous à un seuil :

$$\ell = \frac{\left|I + Z_{f0}^* S_{f0}^{-1} Z_{f0}\right|}{\left|I + Z_{f0}^* P^{-1} Z_{f0}\right|} \qquad (30)$$

Dans l'expression ci-dessus la matrice identité au numérateur et au dénominateur est de taille égale au nombre de colonnes de $H_r$ dans (28), i.e. la dimension d'approximation du vecteur de pointage temporel le long de la rafale $C_r$ (27). La matrice $Z_{f0}$ est une sorte de généralisation de la transformée de Fourier des données au voisinage de l'hypothèse Doppler $f_0$ :

$$Z_{f_0} = X\overline{H}_r(H_r^T \overline{H}_r)^{-\frac{1}{2}} \qquad (31)$$

où

$$X = [X_0, \dots, X_{N-L}] \qquad (32)$$

Sa dépendance au pointage Doppler $f_0$ est due à la matrice $H_r$ elle-même dépendante de $f_0$. De même, la matrice $S_{f0}$ est une sorte d'estimation de l'autocorrélation des données :

$$S_{f_0} = XX^* - Z_{f_0}Z_{f_0}^* \qquad (33)$$

Enfin, la matrice $P$ au dénominateur de (30) apparaît dans les calculs reportés dans [10] et son expression réalise une sorte de couplage entre l'approximation du vecteur de pointage $C$ (*via* $H$) et l'approximation du vecteur de

pointage temporel $\mathbf{C}_r$ le long de la rafale (*via* $\mathbf{H}_r$ dans $\boldsymbol{S}_{f0}$) :

$$P = S_{f_0}^{-1} - S_{f_0}^{-1}H\left(H^*S_{f_0}^{-1}H\right)^{-1}H^*S_{f_0}^{-1}$$

Son expression est implicitement dépendante de la visée ($u_0$,$v_0$,$f_0$) par l'intermédiaire de **H**.

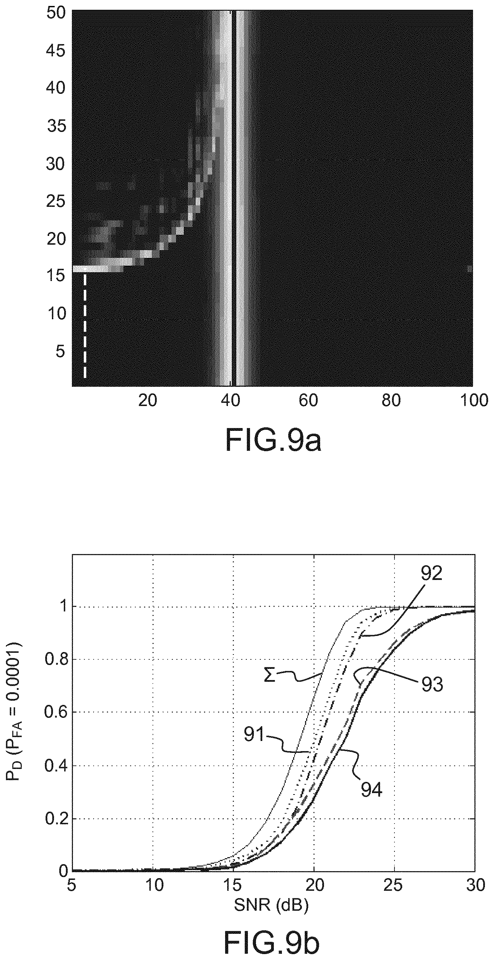

La solution (30) a essentiellement deux limitations. La première est qu'elle ne fournit pas les performances optimales en termes de probabilité de détection, uniformément pour toutes les valeurs de signal à bruit (test non uniformément plus puissant [12]). L'autre limitation de (30) est liée aux degrés de liberté que consomment les approximations effectuées *via* **H** et $\mathbf{H}_r$. En contrepartie de la robustesse aux erreurs angulaires et Doppler, les performances de détection se dégradent d'autant plus que les approximations sont précises et les colonnes de **H** et $\mathbf{H}_r$ nombreuses. La **figure 9a** illustre le compromis entre performance et robustesse en défaveur de (30) sur un cas où la cible est présente avec le même Doppler que les échos de sol à la verticale du porteur, cas de la « raie d'altitude », dans la porte distance n°16 et le filtre Doppler n°4 repéré en pointillés blancs sur la figure 9a. Le vecteur de pointage est approché par interpolation de Lagrange sur 9 points et le vecteur de pointage temporel $\mathbf{C}_r$ à l'échelle de la rafale (27) est approché par développement de Taylor au 1er ordre.

Sur la **figure 9a** on constate que même sans erreurs de pointage (courbe 91), les performances du détecteur (30) restent inférieures à celles de la voie somme $\Sigma$. Les erreurs angulaires (courbe 92) ont une influence beaucoup plus limitée que les erreurs Doppler (courbe 93), qui dimensionnent les performances réalistes (courbe 94). On constate également que les erreurs ont d'autant plus d'impact que le SNR est élevé, mais que le détecteur (30) est assez robuste pour converger vers une probabilité de détection de 1, y compris avec des erreurs de pointage en angle et Doppler.

Un lien intéressant peut être établi entre (30) et une grande part des travaux sur la détection sans données secondaires réalisés par Aboutanious et Mulgrew à la fin des années 2000, reportés dans les références [13] à [18]. On y trouve l'étude détaillée de deux détecteurs, basée sur l'estimation du maximum de vraisemblance pour l'un, noté MLED (*Maximum Likelihood Estimation Detector*) et basé sur l'estimation du maximum de vraisemblance généralisé pour l'autre, noté GMLED (*Generalized Maximum Likelihood Estimation Detector*). Tous deux sont présentés comme des détecteurs du GLRT dans le cas simplifié où l'on ne tient pas compte des erreurs de pointage. Le MLED est vu comme une sorte de GLRT en deux temps correspondant à une simplification du GMLED, ce dernier étant considéré (sans justification) comme le GLRT du problème de détection sans données secondaire et sans erreurs de pointage formulées par l'intermédiaire de (6). Si l'on remplace la modélisation (29) dans le cas où il n'y a pas d'erreurs de pointage, on a avec les notations précédentes **H** = **C**, **B** = 1, $\mathbf{H}_r = \mathbf{C}_r$, et après quelques calculs élémentaires on montre que la solution (30) se simplifie en :

$$\frac{\left|\mathbf{c}_0^* S_{f_0}^{-1} Z_{f_0}\right|^2}{\left(\mathbf{c}_0^* S_{f_0}^{-1} c_0\right)\left(1 + Z_{f_0}^* S_{f_0}^{-1} Z_{f_0}\right)} \qquad (34)$$

où on a noté $\mathbf{C}_0$ le vecteur de pointage dans la direction visée $\mathbf{C}(u_0,v_0,f_0)$ et où $\boldsymbol{Z}_{f_0}$ dans (31) n'a ici qu'une seule colonne (c'est un vecteur). Avec la transformée de Fourier $\overline{\boldsymbol{X}}_{f0}$ et la covariance $\hat{\boldsymbol{R}}$ empirique des données définies en (9) et (10) respectivement, on a ici : $\boldsymbol{Z}_{f_0} = \sqrt{N'}\overline{\boldsymbol{X}}_{f_0}$ et $\boldsymbol{S}_{f_0} = N'\left(\hat{\boldsymbol{R}} - \overline{\boldsymbol{X}}_{f_0}\overline{\boldsymbol{X}}_{f_0}^*\right)$ et en utilisant la formule d'inversion de Sherman-Morrison [19], l'expression (34) peut également s'écrire :

$$\frac{\left|\mathbf{c}_0^* \hat{R}^{-1} \overline{X}_{f_0}\right|^2}{\left(\mathbf{c}_0^* \hat{R}^{-1} c_0\right)\left(1 - \overline{X}_{f_0}^* \hat{R}^{-1} \overline{X}_{f_0}\right)} \qquad (35)$$

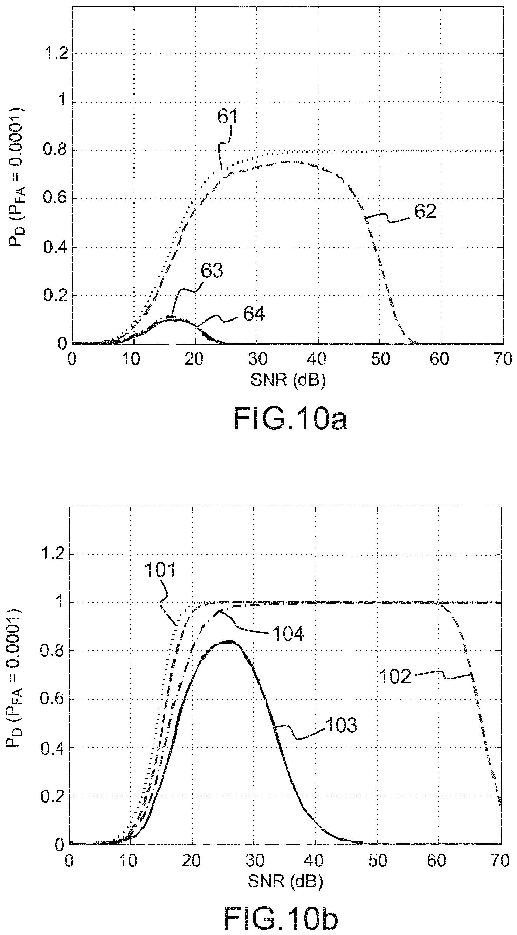

L'expression (34) coïncide avec le détecteur GMLED reporté dans [15] par exemple. L'expression équivalente (35) permet une mise en œuvre plus efficace car la matrice $\hat{\boldsymbol{R}}$ n'est calculée et inversée qu'une seule fois alors que $\boldsymbol{S}_{f0}$ dans (34) est calculée et inversée pour chaque hypothèse Doppler $f_0$. Ainsi, le GMLED est bien le GLRT du problème de détection sans données secondaire restreint au cas sans erreurs de pointage. Par rapport au traitement AMF (8), la présence d'une forme quadratique au dénominateur dans (35) permet d'améliorer la robustesse du détecteur même avec de petites erreurs de pointage. L'inconvénient, par rapport à (8), est la charge de calcul supplémentaire que représente la forme quadratique devant être évaluée pour chaque fréquence Doppler $f_0$ traitée. Les **figures 10a et 10b** montrent une comparaison des performances entre les détecteurs AMF (8) et GMLED (35) sur le même scénario que les figures 6a et 6b. Les courbes de la **figure 10a** sont reprises de la figure 6b pour la facilité de lecture.

Sur la **figure 10b** le détecteur GMLED sans erreurs de pointage a une probabilité de détection 101 qui converge vers 1 contrairement à l'AMF où cette dernière 61 converge vers 0.8. La robustesse du GMLED est bien visible en présence d'erreurs Doppler qui génèrent une perte de l'ordre du dB, ou angulaires 104 qui génèrent une perte de quelques dB (selon le SNR). Pour les erreurs Doppler la probabilité de détection 102 retombe à 0 à partir d'un SNR de 60 dB. Pour les erreurs dans les deux domaines Doppler et angulaires, le GMLED est plus robuste que l'AMF puisque la probabilité de détection 103 atteint 0.8 autour de 25 dB de SNR (alors qu'elle ne dépasse pas 0.1 avec l'AMF) mais retombe rapidement à 0 pour des SNR plus importants. La robustesse du GMLED est donc meilleure sans toutefois être suffisante à moyen/fort rapport signal à bruit.

Une variante simplifiée du détecteur GMLED, le MLED (*Maximum Likelihood Estimator Detector*) a également été proposée et étudiée dans [**13-18**]. Son expression est établie dans [**13**] à partir de travaux antérieurs sur l'algorithme APES (*Amplitude and Phase EStimation*) pour l'estimation spectrale en imagerie radar [**20**], basés sur le critère des moindres carrés. Elle est similaire à (**34**) où la forme quadratique du dénominateur est supprimée :

$$\frac{\left| \mathbf{c}_0^* \mathbf{S}_{f_0}^{-1} \mathbf{z}_{f_0} \right|^2}{\left( \mathbf{c}_0^* \mathbf{S}_{f_0}^{-1} \mathbf{c}_0 \right)} \tag{36}$$

Les performances des détecteurs sans données secondaires MLED et GMLED, leur sensibilité plus forte par rapport aux détecteurs avec données secondaires, ainsi que leurs propriétés hyper-résolvantes, sont étudiées théoriquement et par simulations dans [**14**] avec des compléments dans [**16**], ainsi que sur données réelles dans [**17**]. Il ressort notamment de ces travaux que, d'une manière générale, les détecteurs sans données secondaires sont moins robustes aux erreurs de pointage en Doppler qu'aux erreurs angulaires. L'erreur de pointage sur la partie angulaire a plus d'impact sur les performances du GMLED que sur celles du MLED, mais inversement le GMLED est plus robuste aux erreurs de pointage en Doppler par rapport au MLED. Avec des erreurs de pointage dans les deux domaines angulaires et Doppler, le GMLED est plus performant à faible SNR alors que le MLED l'emporte sur le GMLED à fort SNR.
Quand des données secondaires sont disponibles mais ne sont pas rigoureusement homogènes aux données testées, une approche combinant la détection avec et sans données secondaires a été proposée dans [**15**] et [**18**]. L'approche est basée sur l'utilisation du critère GIP (*Generalized Inner Product*) comme mesure d'hétérogénéité [**21**] entre données testées et données secondaires, et constitue une alternative à d'autres détecteurs comme ACE (*Adaptive Coherence Estimator*) [**22**] ou son extension multidimensionnelle [**23**] qui possèdent des propriétés d'invariance et d'optimalité dans des cas d'hétérogénéité particuliers [**24**- **26**].

Compte tenu des limitations des détecteurs sans données secondaires en présence d'erreurs de pointage, une manière de prendre ces dernière en compte dans le MLED est décrite dans [**27,28**] avec le détecteur SB-APES (*Stop-Band APES*). Partant d'une interprétation du MLED comme une minimisation d'énergie dans un sous-espace, l'approche consiste à compenser les propriétés d'hyper-résolution en interpolant le vecteur de pointage temporel (27) à l'échelle de la rafale $\mathbf{C}_r$ par interpolation de Lagrange en 3 points que sont le Doppler testé et ses demi-résolutions supérieures et inférieures. En reprenant la démarche de minimisation d'énergie avec l'interpolation de $\mathbf{C}_r$, les auteurs parviennent à un détecteur similaire au MLED (**36**) avec une matrice $\mathbf{S}_{f0}$ modifiée. L'approche a montré des résultats prometteurs sur données synthétiques bien qu'elle ne parvienne pas à éliminer entièrement les échos de sol. Elle a été étendue récemment dans [**29**] pour prendre en compte les aspects déterministes de la relation angle-Doppler vérifiée par les échos de sol, afin notamment de garantir une bonne maîtrise de la fausse alarme.

Toutes ces solutions ne sont pas satisfaisantes et résolvent de façon insatisfaisante le problème posé, à savoir la désensibilisation du traitement adaptatif en présence de cible utile dans les données de test.
Plus particulièrement, la déposante a mis en évidence que ce sont des erreurs de mesures, même infimes, en distance, en angle ou en Doppler (vitesse) qui produisent la désensibilisation. Ce problème surgit dès que les signaux reçus diffèrent du modèle de signal que l'on cherche à détecter, et cela même si la différence est très faible, infime. En effet, dès qu'un signal reçu diffère de son modèle, il est considéré comme parasite par le traitement. Partant de constat, l'invention prend en compte la possibilité de présence d'un signal utile dans les données d'estimation avec une incertitude sur sa position angulaire et dans le spectre Doppler. Cette approche se traduit par une approximation paramétrique locale de la réponse du réseau au voisinage des directions angulaires visées et/ou de l'hypothèse Doppler testée (plusieurs variantes étant possibles), et à la mise en œuvre d'un traitement spécifique qui est une généralisation originale des traitements « sans données secondaires ».

L'invention utilise ainsi avantageusement les réponses calibrées de l'antenne radar et de l'évolution de phase due au Doppler des cibles pour les détecter quand leur position spatiale diffère de la direction de visée d'une fraction du pas de quantification des hypothèses angulaire du modèle du signal attendu, et leur Doppler diffère de l'hypothèse Doppler d'une fraction du pas de quantification fréquentielle, sans subir les désensibilisation classiquement liées aux erreurs de pointage. En d'autres termes, au lieu de chercher un signal utile avec des paramètres figés et précis par rapport à un modèle, rigide comme dans (**1**) ou (**6**) notamment, le traitement selon l'invention cherche à détecter un signal dont les paramètres sont dans un voisinage autour d'un modèle cible en vitesse et en angle. Pour faire cette approximation le mieux possible, le procédé décrit collectivement l'ensemble des vecteurs de pointage qui sont susceptibles d'arriver, dépendant notamment de l'antenne réseau et des moyens de calibration. Ce voisinage comporte une partie temporelle et une partie spatiale. La partie temporelle du voisinage est obtenue par la matrice d'approximation $H_r$ (par développement de Taylor par exemple) et la partie spatiale est obtenue par une interpolation de Lagrange. Pour chaque hypothèse de pointage on obtient une valeur du détecteur, à comparer à un seuil.

On peut donc caractériser le procédé selon l'invention par les étapes suivantes :

- une étape de détermination d'un ensemble de vecteurs de pointage décrivant chacun une hypothèse d'arrivée angulaire et une hypothèse de pointage Doppler d'un signal utile reçu ;
- pour chaque vecteur de pointage, une étape d'approximation d'un signal utile reçu dans un voisinage en angle et en Doppler autour dudit vecteur produisant un modèle spatio-temporel approximé au voisinage de chacun desdits vecteurs de pointage ;
- une étape de détection par comparaison, avec un seuil donné, d'une caractéristique statistique de vraisemblance d'un signal reçu au voisinage d'un vecteur de pointage avec le modèle spatio-temporel correspondant audit voisinage.

Comme précisé ci-dessus, la partie temporelle de l'approximation est par exemple effectuée au moyen de la matrice $H_r$. La partie spatiale de l'approximation est par exemple effectuée par l'interpolation de Lagrange.

On décrit par la suite deux exemples de détecteurs. Pour la détermination de ces deux détecteurs, l'invention fait judicieusement la synthèse des avantages constatés de l'approche du GLRT tenant compte des erreurs de pointage selon la relation (**30**) et de l'approche par moindres carrés du MLED selon la relation (**36**) et SB-APES. Ces deux détecteurs sont deux extensions du MLED, dénommés TSA-MLED (*Temporal Steering-vector Approximation - MLED*) et ASA-MLED (*Augmented Steering-vector Approximation* -MLED). Ces extensions :

1) restreignent la relation (**30**) respectivement aux erreurs de pointage en Doppler et aux erreurs sur la réplique spatio-temporelle, permettant de minimiser les degrés de liberté consommés ;
2) suppriment un terme analogue à la forme quadratique du *GMLED* pour augmenter la robustesse et les performances à fort SNR.

Pour le détecteur TSA-MLED, on interpole le vecteur de pointage temporel $C_r$ à l'échelle de la rafale (**27**) par son développement de Taylor qui montre de meilleures performances que l'interpolation de Lagrange. Dans une variante préférée de mise en œuvre on décrit de plus une implémentation efficace du procédé.

De même que dans la relation (**30**) les nouveaux détecteurs ainsi définis ne sont pas uniformément plus puissants. Ils améliorent significativement les performances de détection à moyen / fort SNR mais peuvent être utilisés en conjonction avec d'autres détecteurs. Par exemple, le détecteur selon la relation (**30**) étant parfois meilleur à faible SNR, on peut être amené à implémenter un dispositif mixte entre un détecteur selon (**30**) et TSA-MLED ou ASA- MLED.

Détecteur TSA-MLED

Dans ce cas, pour faire une approximation économique, l'approximation n'est réalisée que sur la partie temporelle. Il n'y a pas d'approximation spatiale et on prend le vecteur de pointage, noté $C_0$, sans approximation.

En restreignant les approximations faites à celles du vecteur de pointage temporel $C_r$ à l'échelle de la rafale (**27**), l'expression générale du rapport de vraisemblance généralisé GLRT (**30**) se particularise de la manière suivante :

$$\ell_T = \frac{C_0^* S_{f_0}^{-1} Z_{f_0} \left( I + Z_{f_0}^* S_{f_0}^{-1} Z_{f_0} \right)^{-1} Z_{f_0}^* S_{f_0}^{-1} C_0}{C_0^* S_{f_0}^{-1} C_0} \qquad (37)$$

$C_0$ étant le vecteur de pointage dans la direction visée $C(u_0, v_0, f_0)$, $u_0, v_0$ étant les hypothèses angulaires de pointage.

Quand on approche le vecteur de pointage temporel $C_r$ à l'échelle de la rafale (**27**) avec un développement de Taylor au 1$^{er}$ ordre au voisinage de l'hypothèse Doppler $f_0$, la matrice $H_r$ de (**28**) possède deux colonnes qui sont la composante Doppler du vecteur de pointage $C_r(f_0)$ et sa dérivée en $f_0$ :

$$H_r = \begin{bmatrix} 1 & e^{i2\pi\frac{f_0}{N}} & \cdots & e^{i2\pi\frac{(N-L)f_0}{N}} \\ 0 & \frac{i2\pi}{N}e^{i2\pi\frac{f_0}{N}} & & \frac{i2\pi(N-L)}{N}e^{i2\pi\frac{(N-L)f_0}{N}} \end{bmatrix}^T \qquad (38)$$

Le vecteur $\varphi_r(f)$ dans (28) quant à lui a deux composantes qui sont $[1, (f-f_0)]^T$ et la matrice $Z_{f0}$ dans (31) ou ci-dessus dans (37) possède également deux colonnes. La matrice $S_{f0}$ est toujours donnée par (33).

Si on approchait le vecteur de pointage temporel $C_r$ à l'échelle de la rafale (27) avec une interpolation de Lagrange en 3 points à l'instar de [27, 28], la matrice $Z_{f0}$ aurait alors trois colonnes.

Etant donnés la robustesse apportée par le détecteur MLED en supprimant la forme quadratique $1 + Z_{f_0}^* S_{f_0}^{-1} Z_{f_0}$ dans (34), on propose de supprimer le terme analogue $I + Z_{f_0}^* S_{f_0}^{-1} Z_{f_0}$ dans (37), dans l'idée d'obtenir un compromis similaire entre performances et robustesse. L'expression résultante est celle du détecteur TSA-MLED :

$$\ell_{\text{TSA-MLED}} = \frac{C_0^* S_{f_0}^{-1} Z_{f_0} Z_{f_0}^* S_{f_0}^{-1} C_0}{C_0^* S_{f_0}^{-1} C_0} \qquad (39)$$

Implémentation du TSA-MLED

De même que pour le GMLED (35) on cherche à éviter de devoir calculer et inverser la matrice $S_{f0}$ pour chaque hypothèse Doppler $f_0$. Dans le cas d'une approximation par développement de Taylor les deux colonnes de $Z_{f0}$ dans (39) et (31) sont notées $z_1$ et $z_2$ : on montre que TSA-MLED peut être formulé de la manière suivante où n'interviennent que $z_1$, $z_2$, le vecteur de pointage $C_0$ au point de visé, et la matrice de covariance $\hat{R}$ empirique des données définies en (10) :

$$\ell_{\text{TSA-MLED}} = \frac{(2-q_1-q_2)\frac{y}{\Delta} - (|a_1|^2 + |a_2|^2)}{\Delta g + y} \qquad (40)$$

où :

$$a_1 = \frac{1}{N'}C_0^* \hat{R}^{-1} z_1 \qquad (41)$$

$$a_2 = \frac{1}{N'}C_0^* \hat{R}^{-1} z_2 \qquad (42)$$

$$q_1 = \frac{1}{N'}z_1^* \hat{R}^{-1} z_1 \qquad (43)$$

$$q_2 = \frac{1}{N'}z_2^* \hat{R}^{-1} z_2 \qquad (44)$$

$$g = \frac{1}{N'}C_0^* \hat{R}^{-1} C_0 \qquad (45)$$

$$r = \frac{1}{N'}z_1^* \hat{R}^{-1} z_2 \qquad (46)$$

$$\Delta = (1-q_1)(1-q_2) - |r|^2 \qquad (47)$$

$$y = (1 - q_2)|a_1|^2 + (1 - q_1)|a_2|^2 + ra_1\overline{a_2} + ra_2\overline{a_1} \qquad (48)$$

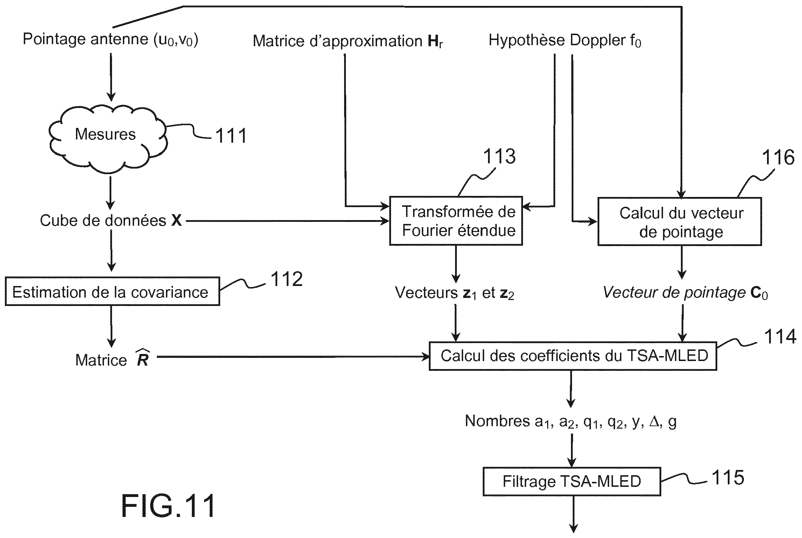

La **figure 11** schématise une variante préférée d'implémentation de TSA-MLED. Les hypothèses angulaires de pointage $(u_0,v_0)$ du vecteur $\mathbf{C}_0$ permettent de réaliser les mesures 111 et d'obtenir le cube de données $\mathbf{X}$, selon les 3 dimensions caractéristiques du radar, agencé selon (**32**).

Ce cube de données permet d'estimer la covariance 112 en calculant $\hat{R}$ selon (**10**), ainsi que de calculer les deux colonnes (vecteurs) $\mathbf{z}_1$ et $\mathbf{z}_2$ de la matrice $\mathbf{Z}_{f0}$ par l'intermédiaire d'une transformation de Fourier modifiée 113 décrite dans (**31**) avec l'hypothèse Doppler $f_0$ et la matrice d'approximation $\mathbf{H}_r$ dont (**38**) est une variante préférée. L'hypothèse Doppler $f_0$ et les angles de pointage $(u_0,v_0)$ permettent par ailleurs de calculer 116 le vecteur de pointage $\mathbf{C}_0$, pour le pointage en vitesse (calcul de la réplique du vecteur de pointage $\mathbf{C}_0$).

Le calcul 114 des coefficients du TSA-MLED est ensuite effectué à partir des éléments $\hat{R}$, $\mathbf{z}_1$, $\mathbf{z}_2$, et $\mathbf{C}_0$. Plus précisément ces coefficients sont les paramètres $a_1$, $a_2$, $q_1$, $q_2$, y, $\Delta$ et g obtenus par les équations (**41**) à (**48**), conduisant au calcul de $\ell_{\text{TSA-MLED}}$.

Le traitement adaptatif est appliqué par le filtrage TSA-MLED 115 défini par $\ell_{\text{TSA-MLED}}$. Plus particulièrement, le détecteur $\ell_{\text{TSA-MLED}}$ est comparé à un seuil donné.

Détecteur ASA-MLED

En restreignant les approximations faites à celles du vecteur de pointage $\mathbf{C}$ pour le pointage du radar comme dans (**14**) avec une matrice d'approximation $\mathbf{H}$, l'expression générale du GLRT selon (**30**) se particularise de la manière suivante :

$$\ell_S = \frac{Z_{f_0}^* S_{f_0}^{-1} H \left( H^* S_{f_0}^{-1} H \right)^{-1} H^* S_{f_0}^{-1} C_0}{1 + Z_{f_0}^* S_{f_0}^{-1} Z_{f_0}} \qquad (49)$$

Contrairement au cas du détecteur TSA-MLED, on n'a pas fait ici d'approximation sur le vecteur de pointage temporel $\mathbf{C}_r$ à l'échelle de la rafale (**27**). La quantité $\mathbf{Z}_{f0}$ coïncide alors avec $Z_{f_0} = \sqrt{N'}\overline{X}_{f_0}$, i.e. la transformée de Fourier habituelle (**9**) en l'hypothèse Doppler $f_0$ à un facteur $\sqrt{N'}$ près. La matrice $\mathbf{S}_{f0}$ est toujours donnée par (**33**).

En suivant la même démarche que pour le détecteur TSA-MLED, on supprime la forme quadratique au dénominateur de (**49**) ce qui donne l'expression du nouveau détecteur ASA-MLED :

$$\ell_{\text{ASA-MLED}} = Z_{f_0}^* S_{f_0}^{-1} H \left( H^* S_{f_0}^{-1} H \right)^{-1} H^* S_{f_0}^{-1} C_0 \qquad (50)$$

Implémentation du ASA-MLED

De même que pour le GMLED (**35**) et le TSA-MLED (**40**) on veut éviter de devoir calculer et inverser la matrice $\mathbf{S}_{f0}$ pour chaque hypothèse Doppler $f_0$. Quelques calculs élémentaires basés encore une fois sur la formule de Sherman-Morrison [**19**] permettent de formuler le ASA-MLED en fonction de deux formes quadratiques dépendant seulement de la transformée de Fourier $\overline{X}_{f0}$, la covariance $\hat{R}$ empirique des données, et la matrice d'approximation $\mathbf{H}$ - respectivement (**9**), (**10**) et (**14**) :

$$\ell_{\text{ASA-MLED}} = \frac{q_2}{(1-q_1)(1-q_1+q_2)} \qquad (51)$$

où

$$q_1 = \overline{X}_{f_0}^* \hat{R}^{-1} \overline{X}_{f_0} \qquad (52)$$

$$q_2 = \overline{X}_{f_0}^* \widehat{R}^{-1} H \left(H^* \widehat{R}^{-1} H\right)^{-1} H^* \widehat{R}^{-1} \overline{X}_{f_0} \qquad \textbf{(53)}$$

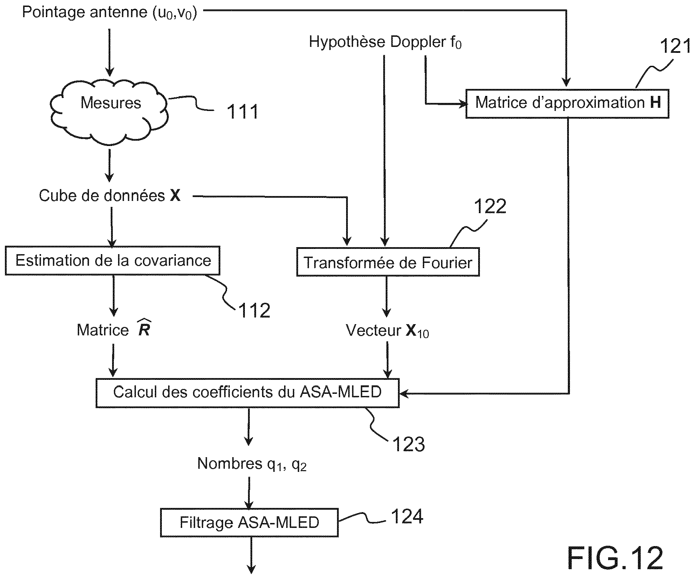

La **figure 12** schématise une variante préférée et avantageuse d'implémentation de ASA-MLED. Dans cet exemple, on utilise plusieurs vecteurs de pointage, c'est-à-dire plusieurs références angulaires.

Les hypothèses angulaires de pointage $(u_0,v_0)$ permettent de réaliser les mesures et obtenir le cube de données **X** agencé selon (**32**). Ce dernier permet d'estimer 112 la covariance en calculant $\widehat{R}$ selon (**10**), ainsi que de calculer 122 la transformée de Fourier du signal dans chacune des voies spatio-temporelle par l'intermédiaire de (**9**) avec l'hypothèse Doppler $f_0$, donnant le vecteur $\overline{X}_{f0}$. Ici la transformée de Fourier n'est pas étendue, car on ne fait pas l'approximation sur la rafale.

L'hypothèse Doppler $f_0$ et les angles de pointage $(u_0,v_0)$ permettent par ailleurs de calculer 121 la matrice d'approximation **H** du vecteur de pointage tel que décrit dans un paragraphe précédent sur la prise en compte des erreurs de pointage. Les éléments $\overline{X}_{f0}$, $\widehat{R}$, et **H** permettent ensuite le calcul 123 des coefficients du $q_1$, $q_2$ du détecteur ASA-MLED par les équations (**52**) et (**53**). Le traitement adaptatif est obtenu par ce filtrage 124 (comparaison du détecteur $\ell_{\text{ASA-MLED}}$ à un seuil donné).

On illustre ci-après l'apport du détecteur TSA-MLED en comparaison de l'état de l'art pour une cible en concurrence avec les échos d'altitude du porteur (cf. figure 9a). On considère les cas d'erreurs de pointage sur la cible rassemblés dans le tableau suivant :

|  | circulaire | élévation | Doppler |
|---|---|---|---|
| Erreur | 17.5 mrad | 8.7 mrad | 2/5 résolution |

L'ouverture de l'antenne étant par exemple 51 mrad dans les deux directions, les erreurs de pointage angulaire relatives sont de 34% et 17% et l'erreur de pointage en Doppler est de 40% (erreurs fortes). L'erreur relative entre le vecteur de pointage associé à la cible et le vecteur de pointage associé aux hypothèses angulaires entachées d'erreurs est 36%.

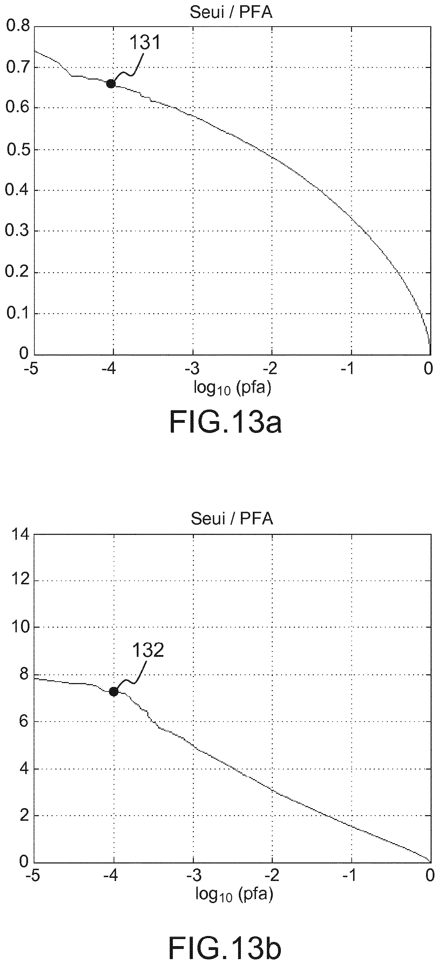

Les **figures 13a et 13b** montrent les valeurs de seuils empiriques estimées par tirages de Monte-Carlo en fonction de la $P_{fa}$ souhaitée, avec $5.10^5$ tirages des détecteurs GLRT « temporel » (**37**) et TSA-MLED (**39**) tous deux mis en œuvre avec interpolation de Taylor.

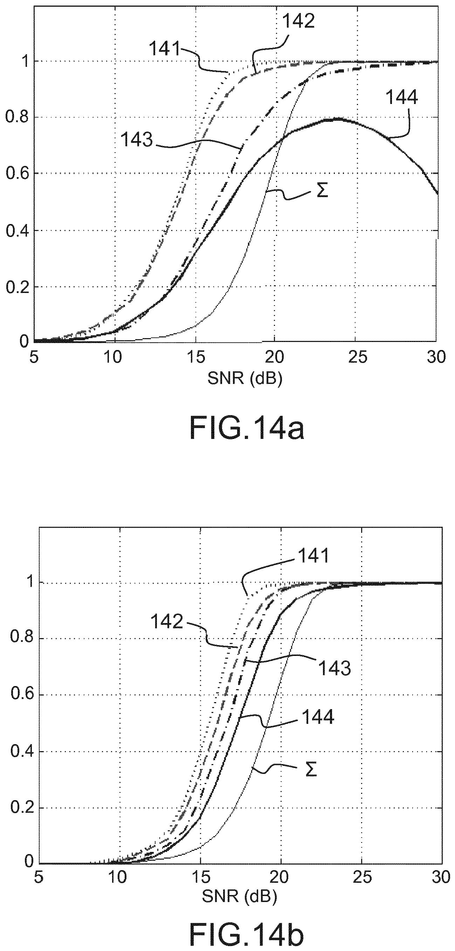

Avec une $P_{fa}$ de $10^{-4}$ le seuil retenu 131 pour le GLRT (figure 13a) et le seuil retenu 132 pour la TSA-MLED (figure 13b) sont 0.66 et 7.27 respectivement. Les **figures 14a et 14b** montrent les probabilités de détection en fonction du SNR des deux détecteurs, GLRT et TSA-MLED. Plusieurs courbes sont représentées sur une même figure : elles correspondent au cas sans erreurs (courbe 141), avec erreur Doppler seule (courbe 142), avec erreur angulaire seule (courbe 143) et erreurs en angle et en Doppler (courbe 144). Pour comparaison, les performances obtenues dans la voie somme sont représentées par une courbe $\Sigma$.

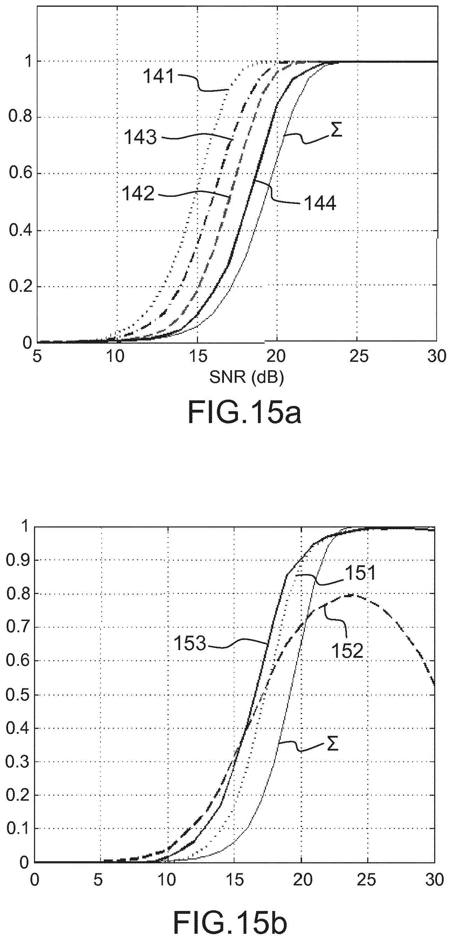

D'après les figures 14a et 14b, les deux détecteurs améliorent nettement les performances du GLRT (**30**) avec approximations dans les domaines spatial et temporel (à comparer avec la figure 9b). Le GLRT avec approximation dans le domaine temporel (**figure 14a**) apporte un gain maximal de plus de 5 dB par rapport à la voie somme quand il n'y a pas d'erreurs sur le vecteur de pointage, pour tous les SNR. Par conception il est très robuste à l'erreur de pointage en Doppler, puisque la désensibilisation est négligeable sauf à fort SNR où elle peut atteindre autour de 2 dB. Il est en revanche peu robuste aux erreurs angulaires car la désensibilisation est d'environ 2 dB dès les faibles SNR, pour atteindre environ 10 dB à fort SNR ce qui donne des performances à la limite un peu moins bonnes que la voie somme. Quand des erreurs angulaires et Doppler sont présentes dans le vecteur de pointage, les performances à faibles SNR restent très proches de celles avec erreurs angulaires seules et procurent un gain important par rapport à la voie somme. Mais à partir de SNR moyens ($P_d \geq 0.4$) le détecteur présente des pertes qui augmentent beaucoup avec le SNR, une $P_d$ qui atteint un maximum à 0.8 avant de retomber à 0 à fort SNR, et des performances très inférieures à la voie somme pour $P_d \geq 0.7$. Sur la **figure 14 b** le détecteur proposé TSA-MLED montre un gain maximal par rapport à la voie somme un peu moins important (~4 dB) que le GLRT mais une robustesse aux erreurs sur le vecteur de pointage bien supérieure. Ainsi, en présence d'erreurs angulaires et Doppler, le TSA-MLED permet de conserver un gain de 2 à 3 dB dès les faibles SNR par rapport à la voie somme, jusqu'aux forts SNR. Ces résultats peuvent encore être comparés au Stop-Band APES [**27,28**] dont les courbes de $P_d$ sont représentées sur la **figure 15a**, avec les mêmes références que sur les figures 14a et 14b.

Sans erreur de pointage, les performances du Stop-Band APES seraient un peu meilleures que celles du TSA-MLED : par exemple pour un SNR de 15 dB la $P_d$ serait de presque 0.6 contre 0.4 sur la figure 14b. En présence d'erreurs, en revanche, les résultats sont en faveur du TSA -MLED puisque ce dernier permet de gagner environ 1.5 à 2 dB de plus que le Stop-Band APES par rapport à la voie somme pour l'ensemble des SNR.

Enfin, on peut remarquer que les détecteurs TSA-MLED et GLRT sont naturellement complémentaires : aucun des deux n'est uniformément meilleur que l'autre pour tous les SNR. A faible/moyen SNR c'est le GLRT qui l'emporte alors qu'à SNR moyen/fort c'est le TSA-MLED. Ce dernier peut ainsi être utilisé en combinaison avec le GLRT pour former un détecteur hybride TSA-MLED / GLRT, à peu de frais en terme de charge de calcul car le GLRT peut être mis en œuvre de manière optimisée avec les mêmes quantités que celles intervenant dans la mise en œuvre optimisée du TSA-MLED, décrite précédemment dans le paragraphe relative à l'implémentation du TSA- MLED :

$$\ell = \frac{y}{g\Delta} \qquad\qquad (54)$$

où y, g et $\Delta$ sont donnés respectivement par (**48**), (**45**), et (**47**). Comme justifié dans le chapitre 4 de [**30**], une très bonne manière de combiner deux détecteurs est d'en former une somme en prenant quelques précautions pour que leurs densités de probabilité correspondent à un certain point. Ici, par exemple, on somme les deux détecteurs rapportés à leurs seuils respectifs. La courbe de probabilité de détection ainsi obtenue est représentée sur la **figure 15b**, où sont de plus reportées les courbes associées au TSA-MLED (courbe 151) et au GLRT (courbe 152), ainsi qu'à la voie somme $\Sigma$. Comme on peut le constater sur la figure, le détecteur hybride (courbe 153) permet de gagner encore environ 1 à 2 dB supplémentaires à faible/moyen SNR par rapport au TSA-MLED sans toutefois atteindre les performances du GLRT, et est équivalent au TSA-MLED à fort SNR. Le détecteur hybride permet ainsi d'atteindre des performances quasiment uniformément optimales pour tous les SNR.

Enfin, il est à noter que l'invention permet avantageusement l'estimation des erreurs de pointage en angle pour les prendre en compte dans des pointages futurs, notamment pour l'auto-calibration du système radar.

## Références citées

[1] J.-L. Milin et al., "AMSAR : A European Success Story in AESA Radar", Proc. International Radar Conference, Bordeaux, France, 12-16 Oct. 2009.

[2] F.C. Robey et al., "A CFAR Adaptive Matched Filter Detector", IEEE Trans. Aerosp. Eelectron. Systems, vol.28, pp.208-216, Jan. 1992.

[3] C. Enderli, J.-Y. Delabbaye, M. Montecot, « Méthode pour estimer avec un radar les paramètres angulaires et/ou Doppler d'une cible située à une distance donnée », *demande de brevet* FR 09/03428.

[4] G. Leborgne, « Interpolation polynomiale, intégration numérique, résolution numérique d'équations différentielles », notes de cours de l'ISIMA, 1ère année, http://www.isima.fr/~leborgne, 5 juin 2012.

[5] C. Vancea et al., "On Double Interpolation in Polar Coordinates", Journal of Computer Science & Control Systems, vol.2, no.2, pp.70-73, Oct. 2009.

[6] J.F. Epperson, "On the Runge Example", J. American Mathematical Monthly, vol.94, no.4, pp.329-341, April 1987.

[7] W. Fraser, "A Survey of Methods of Computing Minimax and Near-Minimax Polynomial Approximations for Functions of a Single Independent Variable", Journal of the ACM, vol.12, no.3, pp.295-314, July 1965.

[8] F. Le Chevalier, « Principe de Traitement des Signaux Radar et Sonar », Masson, Paris, 1989.

[9] L. Wang, "Karhunen-Loève Expansions and Their Applications", Ph.D. Thesis, London School of Economics and Political Science, UK, 2008.

[10] E.J. Kelly, K.M. Forsythe, "Adaptive Detection and Parameter Estimation for Multidimensional Signal Models", Technical Report 848, Massachusetts Institute of Technology, Lincoln Laboratory, 19 April 1989.

[11] A. Stuart et al., "Kendall's Advanced Theory of Statistics", 6th edition, Arnold Publishers, London, 1999.

[12] E.L. Lehman, "Testing Statistical Hypotheses", Springer, New York, USA, 2005.

[13] E. Aboutanious, B. Mulgrew, "A STAP Algorithm for Radar Target Detection in Heterogeneous Environments", Proc. IEEE Workshop on Statistical Signal Processing, pp.966-971, Bordeaux, France, 17-20 July 2005.

[14] E. Aboutanious, B. Mulgrew, "Assessment of the Single Data Set Detection Algorithms under Template Mismatch", Proc. IEEE International Symposium on Signal Processing and Information Technology (ISSPIT), Athens, Greece, 18-21 Dec. 2005.

[15] E. Aboutanious, B. Mulgrew, "A Hybrid STAP Approach for Radar Target Detection in Heterogeneous Environments", Proc. 14th European Signal Processing Conference (EuSiPCo), Florence, Italy, 4-8 Sept. 2006.

[16] C.H. Lim et al., "Adaptive Array Detection Algorithms with Steering Vector Mismatch", Proc. European Signal Processing Conference (EuSiPCo), Florence, Italy, 4-8 Sept. 2006.

[17] E. Aboutanious, B. Mulgrew, "Evaluation of the Single and Two Data Set STAP Detection Algorithms Using Measured Data", Proc. International Geoscience and Remote Sensing Symposium (IGARSS), pp.494-498, Barcelona, Spain, 23-28 July 2007.

[18] E. Aboutanious, B. Mulgrew, "Hybrid Detection Approach for STAP in Heterogeneous Clutter", IEEE Trans. Aerosp. Electron. Systems, vol.46, no.3, July 2010.

[19] G.H. Golub, C.F. Van Loan, "Matrix Computations", The John Hopkins University Press, Baltimore, MA, USA, 1983.

[20] J. Li, P. Stoica, "An Adaptive Filtering Approach to Spectral Estimation and SAR Imaging", IEEE Trans. Signal Processing, vol.44, no.6, pp.1469-1483, June 1996.

[21] M. Rangaswamy et al., "Statistical Analysis of the Non-Homogeneity Detector for STAP Applications", Digital Signal Processing: A Review Journal, vol. 14, no.3, pp.253-257, May 2004.

[22] L.L. Scharf, T. McWhorter, "Adaptive Matched Subspace Detectors and Adaptive Coherence Estimators", Proc. 30th Asilomar Conference Signals Systems Computers, pp.1114-1117, Pacific Grove, CA, USA, 3-6 Nov. 1996.

[23] S.K. Kraut et al., "Adaptive Subspace Detectors", IEEE Trans. Signal Processing, vol.49, no.1, Jan. 2001.

[24] S.K. Kraut et al., "The Adaptive Coherence Estimator: A Uniformly Most-Powerful-Invariant Adaptive Detection Statistic", IEEE Trans. Signal Processing, vol.53, no.2, pp.427-438, Feb. 2005.

[25] S. Bidon et al., "The Adaptive Coherence Estimator is the Generalized Likelihood Ratio Test for a Class of Heterogeneous Environments", IEEE Signal Processing Letters, vol.15, pp.281-284, 2008.

[26] S. Kraut, L.L. Scharf, "The CFAR Adaptive Subspace Detector is a Scale-Invariant GLRT", IEEE Trans. Signal Processing, vol.47, no.9, pp.2538-2541, Sept. 1999.

[27] L. Savy, J.-F. Degurse, « Stop-Band APES: Traitement STAP sur données fortement hétérogènes », Traitement du Signal, n°1-2/2001, pp.231-256, 2011.

[28] J.-F. Degurse et al., "An Extended Formulation of the Maximum Likelihood Estimation Algorithm. Application to Space-Time Adaptive Processing", Proc. International Radar Symposium, pp.763-768, Leipzig, Germany, 7-9 Sept. 2011.

[29] J.-F. Degurse et al., "Single Dataset Methods and Deterministic-Aided STAP for Heterogeneous Environments", Proc. International Radar Conference, Lille, France, Oct. 2014.

[30] T.H. Joo, Detection Statistics for Multichannel Data, RLE Technical Report No. 550, Research Laboratory of Electronics, Massachusetts Institute of Technology, Cambride (MA), USA, Dec. 1989.

**Revendications**

1. Procédé de détection adaptative d'une cible par un dispositif radar en présence d'interférences stationnaires, ledit radar étant équipé d'une antenne réseau, comportant :

- une étape de détermination d'un ensemble de vecteurs de pointage décrivant chacun une hypothèse d'arrivée angulaire et une hypothèse de pointage Doppler d'un signal utile reçu ;
- pour chaque vecteur de pointage, une étape d'approximation d'un signal utile reçu dans un voisinage en angle et en Doppler autour dudit vecteur produisant un modèle spatio-temporel approximé au voisinage de chacun desdits vecteurs de pointage ;
- une étape de détection par comparaison, avec un seuil donné, d'une caractéristique statistique (114, 123) d'un signal reçu de ladite cible au voisinage d'un vecteur de pointage avec le modèle spatio-temporel correspondant audit voisinage,

le procédé étant **caractérisé en ce que**, ledit modèle étant temporel, ladite caractéristique statistique, notée $\ell_{\text{TSA-MLED}}$, est définie comme suit :

$$\ell_{\text{TSA-MLED}} = \frac{(2-q_1-q_2)\frac{y}{\Delta} - \left(|a_1|^2+|a_2|^2\right)}{\Delta g+y}$$

où les coefficients sont :

$$a_1 = \frac{1}{N'}C_0^* \widehat{R}^{-1} z_1$$

$$a_2 = \frac{1}{N'}C_0^* \widehat{R}^{-1} z_2$$

$$q_1 = \frac{1}{N'}z_1^* \widehat{R}^{-1} z_1$$

$$q_2 = \frac{1}{N'}z_2^* \widehat{R}^{-1} z_2$$

$$g = \frac{1}{N'}C_0^* \widehat{R}^{-1} C_0$$

$$r = \frac{1}{N'}z_1^* \widehat{R}^{-1} z_2$$

$$\Delta = (1 - q_1)(1 - q_2) - |r|^2$$

$$y = (1 - q_2)|a_1|^2 + (1 - q_1)|a_2|^2 + ra_1\overline{a_2} + ra_2\overline{a_1}$$

$C_0$ étant le vecteur de pointage défini par ses hypothèses angulaires ($u_0$, $v_0$) et son hypothèse de pointage Doppler ($f_0$) ;
$\widehat{R}$ étant la matrice de covariance estimée des données spatio-temporelles $X$ du signal reçu ;

$z_1$ et $z_2$ étant les deux colonnes de la matrice $Z_{f_0} = X\overline{H}_r(H_r^T\overline{H}_r)^{-\frac{1}{2}}$

$H_r$ étant une matrice d'approximation à deux colonnes, la première colonne étant constituée des composantes dudit développement de Taylor au premier ordre de l'hypothèse de pointage Doppler $f_0$ et la deuxième colonne étant constituée des composantes de la dérivée par rapport à la fréquence audit pointage Doppler.

2. Procédé selon la revendication 1, **caractérisé en ce que** ladite caractéristique statistique est basée sur l'estimation du maximum de vraisemblance.

3. Procédé selon l'une quelconque des revendications précédentes, **caractérisé en ce que** l'approximation spatiale au voisinage d'un vecteur de pointage est effectuée par une interpolation de Lagrange dudit vecteur.

4. Procédé selon l'une quelconque des revendications précédentes, **caractérisé en ce que** l'approximation temporelle au voisinage d'un vecteur de pointage est obtenue par un développement de Taylor au premier ordre de l'hypothèse de pointage Doppler dudit vecteur.

5. Procédé selon l'une quelconque des revendications précédentes, **caractérisé en ce que** ladite caractéristique statistique, notée $\ell_{\text{ASA-MLED}}$, est définie comme suit :

$$\ell_{\text{ASA-MLED}} = \frac{q_2}{(1-q_1)(1-q_1+q_2)}$$

où

$$q_1 = \overline{X}_{f_0}^* \widehat{R}^{-1}$$
$$q_2 = \overline{X}_{f_0}^* \widehat{R}^{-1} H \left( H^* \widehat{R}^{-1} H \right)^{-1} H^* \widehat{R}^{-1} \overline{X}_{f_0}$$

$\widehat{R}$ étant la matrice de covariance estimée des données spatio-temporelles $X$ du signal reçu ;
$\overline{X}_{f_0}$ est la transformée de Fourier en l'hypothèse de pointage Doppler $f_0$ ;
$H$ est une matrice d'approximation obtenue par approximation selon les revendications 3 et 4.

6. Radar aéroporté, **caractérisé en ce qu'**il est apte à mettre en œuvre un procédé selon l'une quelconque des revendications précédentes.

7. Autodirecteur de missile, **caractérisé en ce qu'**il est apte à mettre en œuvre un procédé selon l'une quelconque des revendications 1 à 2.

**Patentansprüche**

1. Adaptives Detektionsverfahren eines Ziels durch eine Radarvorrichtung bei Vorliegen von stationären Interferenzen, wobei der Radar mit einer Netzwerkantenne versehen ist, Folgendes beinhaltend:

   - einen Schritt des Bestimmens einer Gruppe von Peilvektoren, welche jeweils eine Winkelankunfts-Hypothese und eine Doppler-Peilhypothese eines empfangenen Nutzsignals beschreiben;
   - für jeden Peilvektor, einen Schritt des Annäherns eines empfangenen Nutzsignals in der Nachbarschaft in Bezug auf Winkel und Doppler rund um den Vektor, welcher ein angenähertes Raum-Zeit-Modell in der Nachbarschaft eines jeden der Peilvektoren erzeugt;
   - einen Schritt der Detektion durch Vergleich mit einem gegebenen Schwellenwert, eines statistischen Kennwertes (114, 123) eines empfangenen Signals des Ziels in der Nachbarschaft eines Peilvektors mit dem der Nachbarschaft entsprechenden Raum-Zeit-Modell,

wobei das Verfahren **dadurch gekennzeichnet ist, dass**, da das Modell ein zeitliches Modell ist, der statistische Kennwert, bezeichnet $\ell_{\text{TSA-MLED}}$, sich wie folgt definiert:

$$\ell_{\text{TSA-MLED}} = \frac{(2-q_1-q_2)\frac{y}{\Delta} - (|a_1|^2 + |a_2|^2)}{\Delta g + y}$$

wobei die Koeffizienten wie folgt lauten:

$$a_1 = \frac{1}{N'} C_0^* \widehat{R}^{-1} z_1$$

$$a_2 = \frac{1}{N'} C_0^* \widehat{R}^{-1} z_2$$

$$q_1 = \frac{1}{N'} z_1^* \widehat{R}^{-1} z_1$$

$$q_2 = \frac{1}{N'} z_2^* \widehat{R}^{-1} z_2$$

$$g = \frac{1}{N'} C_0^* \widehat{R}^{-1} C_0$$

$$r = \frac{1}{N'} z_1^* \widehat{R}^{-1} z_2$$

$$\Delta = (1 - q_1)(1 - q_2) - |r|^2$$

$$y = (1 - q_2)|a_1|^2 + (1 - q_1)|a_2|^2 + r a_1 \overline{a_2} + r a_2 \overline{a_1}$$

wobei $C_0$ der durch seine Winkelhypothesen $(u_0, v_0)$ und seine Doppler-Peilhypothese $(f_0)$ definierte Vektor ist; wobei $\widehat{R}$ die geschätzte Kovarianz-Matrix der Raum-Zeit-Daten $X$ des empfangenen Signals ist;

wobei $z_1$ und $z_2$ die beiden Spalten der Matrix $Z_{f_0} = X \overline{H}_r (H_r^T \overline{H}_r)^{-\frac{1}{2}}$ sind

wobei $H_r$ eine Annäherungsmatrix mit zwei Spalten ist, wobei die erste Spalte aus den Komponenten der Taylor-Entwicklung erster Ordnung der Doppler-Peilhypothese $f_0$ gebildet wird und die zweite Spalte aus den Komponenten der Ableitung in Bezug auf die Frequenz bei der Dopplerpeilung gebildet wird.

2. Verfahren nach Anspruch 1, **dadurch gekennzeichnet, dass** der statistische Kennwert auf der Schätzung der maximalen Wahrscheinlichkeit beruht.

3. Verfahren nach einem der vorhergehenden Ansprüche, **dadurch gekennzeichnet, dass** die räumliche Annäherung in der Nachbarschaft eines Peilvektors durch Lagrange-Interpolation des Vektors erfolgt.

4. Verfahren nach einem der vorhergehenden Ansprüche, **dadurch gekennzeichnet, dass** die zeitliche Annäherung in der Nachbarschaft eines Peilvektors durch eine Taylor-Entwicklung erster Ordnung der Doppler-Peilhypothese des Vektors erfolgt.

5. Verfahren nach einem der vorhergehenden Ansprüche, **dadurch gekennzeichnet, dass** der statistische Kennwert, bezeichnet $\ell_{\text{ASA-MLED}}$, sich wie folgt definiert:

$$\ell_{\text{ASA-MLED}} = \frac{q_2}{(1 - q_1)(1 - q_1 + q_2)}$$

wobei

$$q_1 = \overline{X}_{f_0}^* \widehat{R}^{-1}$$

$$q_2 = \overline{X}_{f_0}^* \widehat{R}^{-1} H (H^* \widehat{R}^{-1} H)^{-1} H^* \widehat{R}^{-1} \overline{X}_{f_0}$$

wobei $\widehat{R}$ die geschätzte Kovarianz-Matrix der Raum-Zeit-Daten $X$ des empfangenen Signals ist;

wobei $\overline{X}_{f0}$ die Fourier-Transformation der Doppler-Peilhypothese $f_0$ ist;

wobei $H$ eine Annäherungsmatrix ist, welche durch Annäherung nach den Ansprüchen 3 und 4 erzielt wird.

6. Luftgestützter Radar, **dadurch gekennzeichnet, dass** er in der Lage ist, ein Verfahren nach einem der vorhergehenden Ansprüche umzusetzen.

7. Zielsuchgerät einer Rakete, **dadurch gekennzeichnet, dass** es in der Lage ist, ein Verfahren nach einem der Ansprüche 1 bis 2 umzusetzen.

**Claims**

1. A method for adaptive detection of a target using a radar device in the presence of stationary interference, said radar being equipped with an array antenna, comprising:

   - a step of determining a set of steering vectors each describing an angular arrival hypothesis and a Doppler steering hypothesis of a received useful signal;
   - for each steering vector, a step of approximating a received useful signal in a neighbourhood by angle and by Doppler around said vector producing an approximate space-time model in the neighbourhood of each of said steering vectors;
   - a step of detecting by comparing, with a given threshold, a statistical feature (114, 123) of a signal received from said target in the neighbourhood of a steering vector with the space-time model corresponding to said neighbourhood,

   the method being **characterised in that**, with said model being temporal, said statistical feature, denoted $\ell_{\text{TSA-MLED}}$, is defined as follows:

$$\ell_{\text{TSA-MLED}} = \frac{(2-q_1-q_2)\frac{y}{\Delta} - (|a_1|^2+|a_2|^2)}{\Delta g + y}$$

   where the coefficients are:

$$a_1 = \frac{1}{N'}C_0^*\widehat{R}^{-1}z_1$$

$$a_2 = \frac{1}{N'}C_0^*\widehat{R}^{-1}z_2$$

$$q_1 = \frac{1}{N'}z_1^*\widehat{R}^{-1}z_1$$

$$q_2 = \frac{1}{N'}z_2^*\widehat{R}^{-1}z_2$$

$$g = \frac{1}{N'}C_0^*\widehat{R}^{-1}C_0$$

$$r = \frac{1}{N'}z_1^*\widehat{R}^{-1}z_2$$

$$\Delta = (1-q_1)(1-q_2) - |r|^2$$

$$y = (1-q_2)|a_1|^2 + (1-q_1)|a_2|^2 + ra_1\overline{a_2} + ra_2\overline{a_1}$$

with $\boldsymbol{C}_0$ being the steering vector defined by its angular hypotheses $(u_0, v_0)$ and its Doppler steering hypothesis $(f_0)$;

$\hat{\boldsymbol{R}}$ being the estimated covariance matrix of the space-time data $\boldsymbol{X}$ of the received signal;

$z_1$ and $z_2$ being the two columns of the matrix $\boldsymbol{Z}_{f_0} = \boldsymbol{X}\overline{\boldsymbol{H}}_r(\boldsymbol{H}_r^T\overline{\boldsymbol{H}}_r)^{-\frac{1}{2}}$ ;

$\boldsymbol{H}_r$ being a two-column approximation matrix, the first column being formed by components of said first-order Taylor expansion of the Doppler steering hypothesis $f_0$ and the second column being formed by components of the drift relative to the frequency on said Doppler steering.

2. The method as claimed in claim 1, **characterised in that** said statistical feature is based on the maximum likelihood estimation.

3. The method as claimed in any one of the preceding claims, **characterised in that** the spatial approximation in the neighbourhood of a steering vector is carried out by a Lagrange interpolation of said vector.

4. The method as claimed in any one of the preceding claims, **characterised in that** the temporal approximation in the neighbourhood of a steering vector is obtained by a first order Taylor expansion of the Doppler steering hypothesis of said vector.

5. The method as claimed in any one of the preceding claims, **characterised in that** said statistical feature, denoted $\ell_{\text{ASA-MLED}}$, is defined as follows:

$$\ell_{\text{ASA-MLED}} = \frac{q_2}{(1-q_1)(1-q_1+q_2)}$$

where

$$q_1 = \overline{\boldsymbol{X}}_{f_0}^* \widehat{\boldsymbol{R}}^{-1}$$

$$q_2 = \overline{\boldsymbol{X}}_{f_0}^* \widehat{\boldsymbol{R}}^{-1} \boldsymbol{H}\left(\boldsymbol{H}^* \widehat{\boldsymbol{R}}^{-1} \boldsymbol{H}\right)^{-1} \boldsymbol{H}^* \widehat{\boldsymbol{R}}^{-1} \overline{\boldsymbol{X}}_{f_0}$$

with $\hat{\boldsymbol{R}}$ being the estimated covariance matrix of the space-time data $\boldsymbol{X}$ of the received signal;

$\overline{\boldsymbol{X}}_{f0}$ is the Fourier transform in the Doppler steering hypothesis $f_0$;

$\boldsymbol{H}$ is an approximation matrix obtained by approximation as claimed in claims 3 and 4.

6. An airborne radar, **characterised in that** it is able to implement a method as claimed in any one of the preceding claims.

7. A missile homing device, **characterised in that** it is able to implement a method as claimed in any one of claims 1 to 2.

FIG.1

FIG.2

FIG.3

FIG.4

FIG.5

FIG.6a

FIG.6b

FIG.7a

FIG.7b

FIG.8a

FIG.8b

FIG.9a

FIG.9b

FIG.10a

FIG.10b

Pointage antenne $(u_0, v_0)$        Matrice d'approximation $\mathbf{H}_r$        Hypothèse Doppler $f_0$

Mesures ——111

113        116

Cube de données $\mathbf{X}$ ——→ Transformée de Fourier étendue        Calcul du vecteur de pointage

Estimation de la covariance ——112

Vecteurs $\mathbf{z}_1$ et $\mathbf{z}_2$        Vecteur de pointage $\mathbf{C}_0$

Matrice $\widehat{R}$ ————————→ Calcul des coefficients du TSA-MLED ——114

Nombres $a_1$, $a_2$, $q_1$, $q_2$, y, $\Delta$, g

Filtrage TSA-MLED ——115

FIG.11

EP 3 252 423 B1

Pointage antenne ($u_0, v_0$)

Hypothèse Doppler $f_0$

Matrice d'approximation **H** — 121

Mesures — 111

Cube de données **X**

Estimation de la covariance — 112

Transformée de Fourier — 122

Matrice $\widehat{R}$

Vecteur $\mathbf{X}_{10}$

Calcul des coefficients du ASA-MLED — 123

Nombres $q_1, q_2$

Filtrage ASA-MLED — 124

FIG.12

Seui / PFA

FIG.13a

Seui / PFA

FIG.13b

FIG.14a

FIG.14b

FIG.15a

FIG.15b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3011085 A1

- FR 0903428

**Littérature non-brevet citée dans la description**

- Taylor serie expansions for airborne radar space-time adaptative processing. **BEAU et al.** IET RADAR, SONAR AND NAVIGATION. IEE, 13 Octobre 2014, 1-6
- **J.-L. MILIN et al.** AMSAR : A European Success Story in AESA Radar. *Proc. International Radar Conference,* Octobre 2009, 12-16
- **F.C. ROBEY et al.** A CFAR Adaptive Matched Filter Detector. *IEEE Trans. Aerosp. Eelectron. Systems,* Janvier 1992, vol. 28, 208-216
- **C. ENDERLI ; J.-Y. DELABBAYE ; M. MONTECOT.** *Méthode pour estimer avec un radar les paramètres angulaires et/ou Doppler d'une cible située à une distance donnée*
- **G. LEBORGNE.** Interpolation polynomiale, intégration numérique, résolution numérique d'équations différentielles. *l'ISIMA, 1ère année,* 05 Juin 2012, http://www.isima.fr/~leborgne
- **C. VANCEA et al.** On Double Interpolation in Polar Coordinates. *Journal of Computer Science & Control Systems,* Octobre 2009, vol. 2 (2), 70-73
- **J.F. EPPERSON,.** On the Runge Example. *J. American Mathematical Monthly,* Avril 1987, vol. 94 (4), 329-341
- **W. FRASER.** A Survey of Methods of Computing Minimax and Near-Minimax Polynomial Approximations for Functions of a Single Independent Variable. *Journal of the ACM,* Juillet 1965, vol. 12 (3), 295-314
- **F. LE CHEVALIER.** Principe de Traitement des Signaux Radar et Sonar. Masson, 1989
- **L. WANG.** Karhunen-Loève Expansions and Their Applications. *Ph.D. Thesis, London School of Economics and Political Science,* 2008
- Adaptive Detection and Parameter Estimation for Multidimensional Signal Models. **E.J. KELLY ; K.M. FORSYTHE.** Technical Report 848. Massachusetts Institute of Technology, 19 Avril 1989
- **A. STUART et al.** Kendall's Advanced Theory of Statistics. Arnold Publishers, 1999
- **E.L. LEHMAN.** Testing Statistical Hypotheses. Springer, 2005

- **E. ABOUTANIOUS ; B. MULGREW.** A STAP Algorithm for Radar Target Detection in Heterogeneous Environments. *Proc. IEEE Workshop on Statistical Signal Processing,* 17 Juillet 2005, 966-971
- **E. ABOUTANIOUS ; B. MULGREW.** Assessment of the Single Data Set Detection Algorithms under Template Mismatch. *Proc. IEEE International Symposium on Signal Processing and Information Technology (ISSPIT),* 18 Décembre 2005
- **E. ABOUTANIOUS ; B. MULGREW.** A Hybrid STAP Approach for Radar Target Detection in Heterogeneous Environments. *Proc. 14th European Signal Processing Conference (EuSiPCo),* 04 Septembre 2006
- **C.H. LIM et al.** Adaptive Array Detection Algorithms with Steering Vector Mismatch. *Proc. European Signal Processing Conference (EuSiPCo),* 04 Septembre 2006
- **E. ABOUTANIOUS ; B. MULGREW.** Evaluation of the Single and Two Data Set STAP Detection Algorithms Using Measured Data. *Proc. International Geoscience and Remote Sensing Symposium (IGARSS),* 23 Juillet 2007, 494-498
- **E. ABOUTANIOUS ; B. MULGREW.** Hybrid Detection Approach for STAP in Heterogeneous Clutter. *IEEE Trans. Aerosp. Electron. Systems,* Juillet 2010, vol. 46 (3
- **G.H. GOLUB ; C.F. VAN LOAN.** Matrix Computations. The John Hopkins University Press, 1983
- **J. LI, P. STOICA.** An Adaptive Filtering Approach to Spectral Estimation and SAR Imaging. *IEEE Trans. Signal Processing,* Juin 1996, vol. 44 (6), 1469-1483
- **M. RANGASWAMY et al.** Statistical Analysis of the Non-Homogeneity Detector for STAP Applications. *Digital Signal Processing: A Review Journal,* Mai 2004, vol. 14 (3), 253-257
- Adaptive Matched Subspace Detectors and Adaptive Coherence Estimators. **L.L. SCHARF ; T. MCWHORTER.** Proc. 30th Asilomar Conference Signals Systems Computers. Pacific Grove, 03 Novembre 1996, 1114-1117

- **S.K. KRAUT et al.** Adaptive Subspace Detectors. *IEEE Trans. Signal Processing,* Janvier 2001, vol. 49 (1
- **S.K. KRAUT et al.** The Adaptive Coherence Estimator: A Uniformly Most-Powerful-Invariant Adaptive Detection Statistic. *IEEE Trans. Signal Processing,* Février 2005, vol. 53 (2), 427-438
- **S. BIDON et al.** The Adaptive Coherence Estimator is the Generalized Likelihood Ratio Test for a Class of Heterogeneous Environments. *IEEE Signal Processing Letters,* 2008, vol. 15, 281-284
- **S. KRAUT ; L.L. SCHARF.** The CFAR Adaptive Subspace Detector is a Scale-Invariant GLRT. *IEEE Trans. Signal Processing,* Septembre 1999, vol. 47 (9), 2538-2541
- **L. SAVY ; J.-F. DEGURSE.** Stop-Band APES: Traitement STAP sur données fortement hétérogènes. *Traitement du Signal,* 2011, (1-2/2001), 231-256
- **J.-F. DEGURSE et al.** An Extended Formulation of the Maximum Likelihood Estimation Algorithm. Application to Space-Time Adaptive Processing. *Proc. International Radar Symposium,* 07 Septembre 2011, 763-768
- **J.-F. DEGURSE et al.** Single Dataset Methods and Deterministic-Aided STAP for Heterogeneous Environments. *Proc. International Radar Conference,* Octobre 2014
- Detection Statistics for Multichannel Data. **T.H. JOO.** RLE Technical Report. Research Laboratory of Electronics, Décembre 1989